# EUROPÄISCHE PATENTSCHRIFT

(11) **EP 2 520 737 B1**
(45) Veröffentlichungstag und Bekanntmachung des Hinweises auf die Patenterteilung: **22.03.2017**
(21) Anmeldenummer: 11003597.9
(22) Anmeldetag: 03.05.2011
(51) Int. Cl.: E04F 15/02, E04F 15/04, E04F 13/08, F16B 5/00

(54) **Baupaneel mit einer Einrichtung zur Verbindung mit wenigstens einem weiteren Baupaneel auf einem Untergrund**
Construction panel with a device for connection with at least one further construction panel on a base
Panneau de construction doté d'un dispositif de liaison avec au moins un autre panneau de construction sur un sous-sol

(43) Veröffentlichungstag der Anmeldung: 07.11.2012
(73) Patentinhaber: Barlinek S.A., 25-323 Kielce (PL)
(72) Erfinder: Konstanczak, Marek, 74-320 Barlinek (PL)
(74) Vertreter: Bischof, Oliver

(56) Entgegenhaltungen:
- WO-A1-00/47841
- WO-A2-2008/004960
- DE-A1- 10 237 397
- DE-U1-202009 004 530

## Beschreibung

Die Erfindung betrifft ein Baupaneel mit einer Einrichtung zur Verbindung mit wenigstens einem weiteren gleichartigen Baupaneel auf einem Untergrund, wobei das Baupaneel dazu vorgesehen ist, gegen ein bereits verlegtes Baupaneel abgesenkt zu werden, wobei
- das Baupaneel jeweils gegenüberliegende erste und zweite profilierte Seitenflächen aufweist, an denen je eine Stoßfläche angeordnet ist, die senkrecht zu einer Nutzfläche bzw. Basisfläche des Baupaneels liegt,
- die Stoßfläche der ersten Seitenfläche in eine entlang der Seitenfläche des Baupaneels verlaufende, erste Nut übergeht,
- über die Stoßfläche der ersten Seitenfläche des Baupaneels ein Verriegelungsarm hinausragt,
- der Verriegelungsarm in eine zur Nutzfläche gerichtete, etwa trapezförmige Lippe ausläuft, die wiederum eine in einen Boden des Verriegelungsarms auslaufende Innenfläche aufweist,
- die erste Nut einen gegenüber der Stossfläche der ersten Seitenfläche zurückversetzten Nutboden aufweist,
- in die erste Nut des Baupaneels ein länglicher, wenigstens teilweise flexibler, separater Verbinder wenigstens teilweise eingelassen ist, der im verlegten Zustand der Baupaneele mit der zweiten Seitenfläche eines gegenüberliegenden Baupaneels zusammenwirkt,
- der Verbinder in unverformtem Zustand einen etwa dachrinnenförmigen Querschnitt aufweist und eine wenigstens teilweise bogenförmige, aus einem Basisteil und einem Schenkel bestehende Wandung besitzt,
- die Wandung mit einer wenigstens teilweise teilzylindrischen oder teilelliptischen Innenfläche an einer Kante dieser Innenfläche - im Querschnitt des Verbinders gesehen - in ein Kopfstück und an einer anderen Kante in einen Fuß übergeht,
- der Fuß eine nach außen gerichtete, im eingesetzten Zustand der Innenfläche der Lippe zugewandte Seitenfläche und eine sich an die Seitenfläche anschließende Standfläche aufweist,
- das Kopfstück des Verbinders im eingesetzten Zustand des Verbinders in Richtung Nutzfläche zeigt,
- der sich an das Basisteil anschließende Schenkel, der in das Kopfstück ausläuft, im eingesetzten Zustand des Verbinders beweglich angeordnet ist, so dass beim Zusammenfügen von Baupaneelen der Schenkel mitsamt Kopfstück in Richtung des Nutbodens verschwenkt werden kann,
- die zweite Seitenfläche eine Verriegelungswalze aufweist, welche beim Zusammenfügen zweier Baupaneele in den von der Innenfläche des Verbinders aufgespannten Innenraum des gegenüberliegenden Baupaneels eingreift,
- die Verriegelungswalze in eine in Richtung Basisfläche offene Ausnehmung des Baupaneels übergeht,
- der Boden des Verriegelungsarms und die erste Nut sowie die geneigte Innenfläche der Lippe einen Sitz für die Unterbringung des Verbinders bilden,
- und wobei das Kopfstück im in die erste Nut eingepassten Zustand des Verbinders wenigstens teilweise gegen eine erste Nutflanke der besagten Nut drückt.

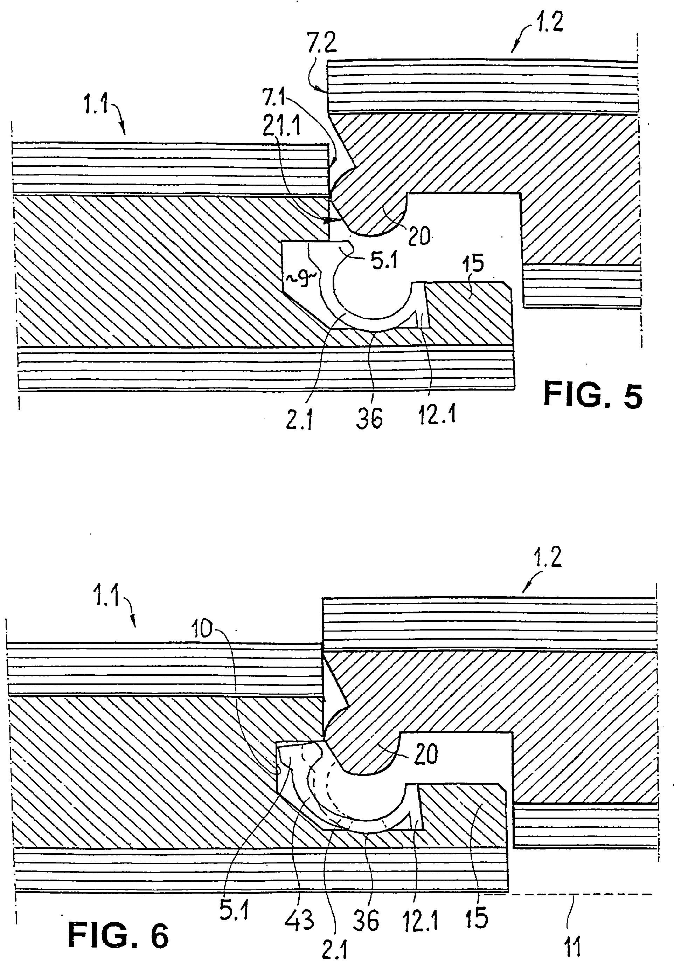

Ein Baupaneel mit einer solchen Einrichtung ist aus
WO 2008/004960 bekannt. In eine halbrunde Ausnehmung eines bereits verlegten Baupaneels ist gemäß Figuren 6a bis 6d ein etwa boomerangförmiger, schaukelartig wirkender Verbinder eingesetzt, der durch ein Gegenpaneel unter Hebelwirkung bewegt wird, bis ein dickerer Rand des Verbinders - im Querschnitt der Paneelverbindung gesehen - in eine zu dem Rand kompatible Nut des Gegenpaneels einspringt. Der separate Verbinder hat die Aufgabe, die Verriegelung der Baupaneele im Wesentlichen senkrecht gegenüber der Trittfläche zu gewährleisten. Die Aufgabe der horizontaler Verriegelung übernimmt auf herkömmlicher Weise der Verriegelungsarm mit seiner Lippe. Zwar verfügt der bekannte Verbinder über eine zusätzliche, auf das Gegenpaneel gerichtete eigene Lippe, sorgt diese allerdings lediglich für eine Verstärkung der vorhandenen horizontalen Verriegelung. Nachteilig bei der bekannten Einrichtung ist, dass der Verbinder vor dem Zusammenfügen beider Baupaneele relativ leicht aus der Befestigung in der Nut herausfallen kann, insbesondere dann, wenn das Material des Verbinders federelastisch ist. Die Stabilität der Verbindung scheint unzureichend zu sein.
DE 20 2009 004 530 U1 beschreibt Fußbodenpaneele mit Kupplungsteilen, welche ein horizontal und ein vertikal aktives Verriegelungssystem bilden, umfassend einen separaten Verbinder aus einem coextrudierten KunststoffStreifen mit Bereichen von unterschiedlichen Eigenschaften und spezieller unterschiedlicher Flexibilität, wobei einen Bereich des Verbinders ein Scharnier darstellt, das den Verbinder in ein Basisteil mit Fuß und ein auf den Boden des Paneels gerichtetes Kopfstück teilt. Nachteilig ist, dass der Verbinder, insbesondere dessen Fuß beim Einmontieren des Verbinders relativ leicht aus seinem Sitz herausfallen kann.
In DE 102 37 397 A1 sind unterschiedliche Ausführungsformen eines elastischen, ein- oder zweiteiligen Verbinders mit Hohlkammern dargestellt, der einem Fensterdichtungsprofil ähnelt. Außerdem ist der Fig. 5 ein ankerartiger, aus zwei Teilen bestehender Verbinder zu entnehmen, bei dem ein über eine Seitenfläche des einen Paneels ragender Mittelsteg, Stempel genannt, in einen Inneraum eines in eine Nut eines zweiten Paneels hinein gepressten C-Profils mit Kopfstück eingreift. Die profilierten Seitenflächen der beiden miteinander verbundenen Paneele verlaufen im Wesentlichen schräg zur Trittfläche der Paneele, wobei die gekoppelten Teile des Verbinders senkrecht auf die Seitenflächen gerichtet sind. Dabei sind beide Teile des Verbinders spiegelsymmetrisch zu seiner Längsachse aufgebaut. Nachteilig bei einer so ausgestalteten Paneelverbindung mit zweiteiligem Verbinder gemäß Fig. 5 ist, dass eine nachträgliche Trennung der miteinander verbundenen Fußbodenpaneele nicht realisierbar ist. Auch eine Verbindung der Fußbodenpaneele miteinander bzw. ihre Verlegung auf einen Untergrund scheint problematisch zu sein, weil eine Montage in Horizontalrichtung mit Hilfe des bekannten Schlagklotzes unmöglich und Montage mit Schwenkbewegung besonders erschwert ist.
Bei WO00/47841 A1 handelt es sich u.a. um ein in eine Nut des Fußbodenpaneels eingesetztes elastisches Profil, das auf sein Innere gerichtete, abgewinkelte Randbereiche aufweist. Auch diese Ausführung des Profils verbirgt das Risiko, dass es ebenso aus seinem Sitz relativ leicht herausfallen kann.

Außerdem sind mehrere Ausführungen von anderen schaukelartig wirkenden Verbindern bekannt.

Aufgabe der Erfindung ist, eine alternative gattungsgemäße Einrichtung zur Verbindung von polygonalen, plattenförmigen Baupaneelen miteinander mit Hilfe der separaten Verbinder zu entwickeln, die nicht schaukelartig wirken und deren Halt am Baupaneel sicher und stabiler ist.

Diese Aufgabe ist durch eine Einrichtung der eingangs genannten Art gelöst, bei der
- der Fuß des Verbinders mit seiner Seitenfläche und mit seiner Standfläche sowie das dem Boden zugewandte Basisteil des Verbinders die besagte Innenfläche der Lippe und den Boden des Verriegelungsarms vor und nach dem Zusammenfügen zweier Baupaneele kontaktieren,
- wobei die Lippe des Verriegelungsarms sich in Richtung Bodenschicht derart verjüngt, dass die Innenfläche der Lippe unter einem spitzen Winkel zum Boden des Verriegelungsarms bzw. zur Basisfläche des Baupaneels geneigt ist,
- und wobei die Verriegelungswalze wenigstens eine ebene Andrückfläche aufweist, die bei der Verbindung zweier Baupaneele gegen das Kopfstück stößt, so dass das Kopfstück in Richtung Nutboden verschwenkt wird.

Die Ähnlichkeit zwischen den Verbindern gemäß Erfindung und herkömmlichen, etwa halbrunden oder teilelliptischen Dachrinnen kann dadurch begründet werden, dass das Kopfstück des Verbinders etwa der Tropfkante der Dachrinne und der Fuß dem der Tropfkante abgewandten Rinnenwulst der Dachrinne entspricht.

Im Weiteren wird das Baupaneel, das gegen das bereits verlegte herabgeschwenkt wird, als Gegenpaneel bezeichnet. Die Begriffe, wie "oben", "obere", "unten", "untere", "unterhalb", "oberhalb" etc. beziehen sich auf die auf einen Untergrund verlegten Baupaneele, wie dies auch in der Zeichnung dargestellt ist. Ferner wird der separate Verbinder als Profil bezeichnet.

Bei der Einrichtung gemäß Erfindung handelt es sich annähernd um solche, die eine sogenannte Hakenverbindung beinhaltet, bei der normalerweise die die Hakenverbindung bildenden Teile: Lippe am Verriegelungsarm und die auf den Boden gerichtete Verriegelungswalze des Gegenpaneels miteinander dicht verhakt sein sollen und die Stoßflächen der beiden Baupaneele in flächigen Kontakt miteinander gebracht werden sollen, um die Verriegelung der Baupaneele in horizontaler Richtung zu sichern. Für die bekannte Lösung gemäß WO 2008/004960 kann diese Voraussetzung auch dann erfüllt werden, wenn der Verbinder aus der Nut herausgenommen wird. Der separate Verbinder gemäß WO 2008/004960 liegt außerhalb der Flächen, die die eigentliche Hakenverbindung bilden.

Es ist nicht zu übersehen, dass die Hakenverbindung bei der erfindungsgemäßen Lösung erst nach dem Zusammenfügen der beiden Baupaneele zustande kommt, indem sich zwischen der Innenfläche der Lippe und der beim Zusammenfügen der Baupaneele in den Verbinder eingreifenden Verriegelungswalze der stegförmige Fuß befindet. Sollte der Verbinder herausgenommen werden, kann wegen entstandener Spalte nicht über eine Hakenverbindung die Rede sein. In dieser Lage wären die beiden Baupaneele vor dem Verschieben zueinander sowohl in horizontaler als auch in vertikalen Richtung nicht gesichert. Von großem Vorteil ist, dass das Profil gemäß vorliegender Erfindung eine Verriegelung zugleich in beiden Richtungen gewährleisten kann.

Vorzugsweise ist der separate Verbinder gemäß Erfindung aus Kunststoff angefertigt. Als Kunststoffe für den Verbinder kommen Thermoplaste, wie Polyethylen (PE), Polypropylen (PP), Polystyrol (PS), Polyamide (PA), Polycarbonate (PC), Polyethylenterephthalat (PET) u. a., sowie sogenannte technische Kunststoffe, wie Styrol-Copolymerisate (ABS), Polyamide (PA), Polycarbonate (PC), Polyethylenterephthalat (PET), Polymethylmethacylat (PMMA), Polyoxymethylen (POM), Fluorkunststoffe (Teflon), Polyurethane (PUR) in Frage.

Der Fuß des Profils kann stegförmig oder massiv sein, wobei von entscheidender Bedeutung ist, dass dieser eine geneigte Seitenfläche aufweist, deren Neigungswinkel zu seiner Standfläche dem besagten scharfen Winkel an der Lippe entspricht. So kann der Fuß und der untere Teil des einmontierten Profils nahezu formschlüssig, und zwar vor und nach der Absenkung des Gegenpaneels an dem Verriegelungsarm anliegen.

Der Verbinder kann in einem Übergangsbereich seines Basisteils zum beweglichen Schenkel wenigstens einen nach außen ragenden, in Längsausrichtung des Verbinders verlaufenden Vorsprung aufweisen. Der Vorsprung kann im eingesetzten Zustand des Verbinders mit der Nutflanke der zweiten Nut in Kontakt stehen.

Das Profil kann auch aus sogenannten Integral-Kunststoffen hergestellt sein. Ein solches Profil kann beispielsweise einen harten Fuß und einen relativ weichen, sich an das Kopfstück anschließenden Schenkel aufweisen. Dabei kann das Kopfstück und der Fuß steifer als das rechtliche Material des Profils ausgeführt sein. Das Profil kann glatte und/oder aufgeraute Oberflächen haben.

Ferner kann das Profil aus Metall, Holzwerkstoff oder Verbundstoff gefertigt sein.

Das Profil kann wenigstens in seinem Schenkelbereich elastisch verformbar sein. Die Elastizität des Profils kann durch entsprechende Verengungen oder sanfte Übergange des Schenkels zum Fuß unterstützt sein.

Das Kopfstück kann eine streifenförmige, ebene, im eingesetzten Zustand der ersten Nutflanke zugewandte Druckfläche aufweisen, die sich wiederum in eine - im Querschnitt des Profils gesehen - nach unten zeigende, schräge oder abgerundete Gleitfläche fortsetzt.

Vorzugsweise verläuft die erste, obere Nutflanke der Nut zur Aufnahme des Profils parallel und die zweite, untere Nutflanke schräg zur Nutz- bzw. Basisfläche des Baupaneels, wobei die untere Nutflanke in den Boden des Verriegelungsarms übergeht. Die beiden Nutflanken schließen sich an einen senkrecht zur Nutzfläche angeordneten Nutboden der besagten Nut an. So konfigurierte Nut hat genügend Platz zum Verschwenken des Kopfstücks. Die ebene Druckfläche des Kopfstücks verbleibt im nicht durch das herabsenkende Gegenpaneel hervorgerufenen, gespannten Zustand in flächigem Kontakt mit der oberen Nutflanke oder drückt gegen sie.

Der Boden des Verriegelungsarms verläuft vorzugsweise parallel zur Basisfläche und bildet dann eine Stützfläche für den Fuß und für den unteren Teil der Wandung des Verbinders. Zur Aufnahme eines massiven Fußes, dessen ebene Standfläche sich breiter als die des stegförmigen Fußes erstreckt, eignet sich insbesondere ein ebener oder abgestufter Boden.

Am Boden des Verriegelungsarms kann wenigstens eine parallel zur Nut verlaufende Mulde eingearbeitet sein, die vorzugsweise etwa in der Mitte des Bodens, auf jeden Fall außerhalb der unteren geneigten Nutflanke liegt. An die Mulde kann sich der untere Teil des eingelegten Profils, also sein Basisteil abstützen. Für das einmontierte Profil gemäß Erfindung gilt also das Prinzip zumindest dreier Kontaktflächen dieses Profils mit dem unteren Baupaneel, nämlich mit der geneigten Innenfläche der Lippe, mit dem Boden des Verriegelungsarms und mit der oberen Nutflanke der ersten Nut. So festgelegtes Profil sitzt sicher an der Seitenfläche des unteren Baupaneels und hat kaum Chance, sich selbstständig zu lösen.

Bei einer besonders vorteilhaften Ausführungsform der Erfindung sind vier Kontaktflächen des Profils mit dem unteren Baupaneel vorgesehen, wobei die vierte Kontaktfläche durch einen von dem Profil herabstehenden, federnden Steg oder wenigstens eine herabstehende, federnde Zunge entstanden ist, die im eingesetzten Zustand gegen die untere, schräge Nutflanke der ersten Nut drückt. Hierdurch wird eine noch stabilere Lage des in den Sitz untergebrachten Profils erzielt.

Das Kopfstück kann beim Herabschwenken des Baupaneels in Richtung Boden des bereits verlegten Baupaneels eine Drehbewegung um die Mulde bzw. um eine Abstufung des Bodens des Verriegelungsarms ausüben. Verschwenkt wird also der Schenkel des Profils. Dabei können der Fuß des Verbinders in seiner Lage an der Innenfläche der Lippe sowie und der Basisteil des Profils unbeweglich verbleiben.

Die Profile können manuell oder mechanisch bzw. mit Hilfe eines Automaten werkseitig in die vorhandene Nut des Baupaneels eingedrückt sein. Die mit den Profilen versehenen Baupaneele können in dieser Form gelagert und vertrieben werden.

Wenn das Profil aus Kunststoff hergestellt wird, kann es preiswert als Massenartikel zur Verfügung gestellt werden.

Die Profile gemäß Erfindung sind im Wesentlichen für die Schmalkanten der Baupaneele bestimmt. Allerdings können auch in den längeren Seitenflächen der Baupaneele integriert sein, wenn diese an den separaten Verbinder entsprechend angepasst werden.

Vorteilhaft ist, wenn an der am Gegenpaneel befindlichen Verriegelungswalze eine schräg gegenüber der Nutztfläche angeordnete Andrückfläche eingebracht ist, mit der auf die plane Druckfläche, aber vor allem auf die abgerundete oder abgeschrägte Gleitfläche des Kopfstücks ein Druck ausgeübt wird. Die schräge Andrückfläche der nach unten gerichteten Verriegelungswalze liegt unter einem Winkel ≥ 45°, vorzugsweise 60° gegenüber der Nutzfläche. Diese Winkelgröße gewährleistet ein optimales Gleiten der Verriegelungswalze am Kopfstück, ohne dass das Kopfstück aus dem Sitz herausfallen kann.

Die abgerundete Oberfläche der Verriegelungswalze kann in eine gegenüber der oberen Stoßfläche des Baupaneels zurückversetzte Schräge übergehen, derart, dass ein scharfer, etwa V-förmiger Übergang zur Aufnahme des Kopfstücks gebildet ist.
Das Kopfstück kann aber auch in eine Nut des die Verriegelungswalze tragenden Baupaneels eingreifen. Vorzugsweise ist die Nut trapezförmig.

Vorteilhaft ist, dass die abgerundete Oberfläche der Verriegelungswalze über eine schräg oder senkrecht gegenüber der Nutzfläche angeordnete, ebene Fläche in die nach unten offene Ausnehmung des die Verriegelungswalze tragenden Baupaneels übergeht. Dabei kann eine streifenförmige Innenfläche des oberen Teils des Fußes vorgesehen sein, die zu der besagten ebenen Fläche kompatibel ist.

Die Baupaneele als solche können aus Kunststoff, Metall, Holzwerkstoff, darin Papier oder anderen nachwachsenden Rohstoffen, wie Kork, hergestellt sein. Die Baupaneele können in Massiv- oder Schichtbauweise, wie an sich bekannte HDF- oder MDF-Paneele, gefertigt sein und ein Holz- oder Fliesendekor aufweisen, das mit mindestens einer Schicht aus einem transparenten oder transluzenten Kunstharz abgedeckt ist. Die Baupaneele können mit antibakteriellen und/oder feuerhemmenden Mitteln ausgerüstet sein.

Die Baupaneele können als Fußbodenpaneele, als Wandverkleidungspaneele oder als Möbelteile Verwendung finden.

Ausführungsbeispiele der Erfindung sind anhand der Zeichnung näher erläutert. Die Figuren zeigen:
- Figuren 1 und 2: zwei Baupaneele jeweils im Bereich ihrer Seitenfläche, ohne Verbinder, jeweils in einem Schnitt,
- Figuren 3 und 4: jeweils ein Baupaneel mit eingelegtem Verbinder, in zwei Stellungen des Kopfstücks, jeweils in einem Schnitt,
- Figuren 5 bis 7: jeweils zwei Baupaneele mit eingelegtem Verbinder, in drei Stellungen des herabschwenkenden Baupaneels, jeweils in einem Schnitt,
- Fig. 8: einen Verbinder in einer ersten Ausführungsform, im Querschnitt des Profils,
- Fig. 9: den Verbinder gemäß Fig. 8 in einer perspektivischen Ansicht;
- Fig. 10: einen Verbinder mit einem massiven Fuß, im Querschnitt des Profils,
- Fig. 11: eine Abweichungsform des in Fig. 8 dargestellten Verbinders, ebenso im Querschnitt des Profils,
- Fig. 12: einen anderen Verbinder, mit massivem Fuß, im Querschnitt des Profils,
- Fig. 13: den Verbinder gemäß Fig. 12, angeordnet zwischen der Lippe und der seitlichen Nut eines Baupaneels, in einem Schnitt,
- Fig. 14: einen weiteren Verbinder mit massivem Fuß, im Querschnitt des Profils,
- Fig. 15: den Verbinder gemäß Fig. 14, angeordnet zwischen der Lippe und der seitlichen Nut eines Baupaneels, in einem Schnitt,
- Fig. 16: verlegte Baupaneele gemäß Figuren 1 und 2, jedoch ohne Verbinder, in einem Schnitt;
- Figuren 17 und 18: einen anderen Verbinder, mit abgeschrägten Enden des Kopfstücks, in einer Draufsicht auf eine Seitenfläche seines Fußes und in einer das Profil zeigenden Seitenansicht des Verbinders;
- Fig. 19: den Verbinder gemäß Figuren 17 und 18 in einer perspektivischen Ansicht;
- Figuren 20 und 21: den Verbinder gemäß Figuren 17 und 18, ohne abgefasten Enden des Kopfstücks, in einer Draufsicht auf eine Seitenfläche seines Fußes und in einer das Profil zeigenden Seitenansicht des Verbinders;
- Fig. 22: den Verbinder gemäß Figuren 20 und 21 in einer perspektivischen Ansicht;
- Fig. 23: einen Verbinder mit einem im Übergangsbereich seines Basisteils zum Schenkel liegenden Vorsprung, im Querschnitt des Profils,
- Fig. 24: den Verbinder gemäß Fig. 23 in einer perspektivischen Ansicht,
- Fig. 25: zwei miteinander verbundene Baupaneele mit eingelegtem Verbinder gemäß Fig. 25, in einem Schnitt,
- Fig. 26: einen Verbinder mit anderem Vorsprung, im Querschnitt des Profils,
- Fig. 27: den Verbinder gemäß Fig. 26 in einer perspektivischen Ansicht,
- Fig. 28a: zwei miteinander verbundene Baupaneele mit eingelegtem Verbinder gemäß Figuren 26 und 27, in einem Schnitt,
- Fig. 28b: die miteinander verbundene Baupaneele gemäß Fig. 28a, mit angedeutetem konkavem Boden, in einem Schnitt;
- Fig. 29: einen weiteren Verbinder mit abgewinkelten Vorsprung und mit abgerundetem Fuß, im Querschnitt des Profils;
- Fig. 30: den Verbinder gemäß Fig. 29 in einer perspektivischen Ansicht;
- Fig. 31: zwei miteinander verbundene Baupaneele mit eingelegtem Verbinder gemäß Fig. 29, in einem Schnitt,
- Fig. 32: den Verbinder gemäß Fig. 29, jedoch ohne abgeschrägten Eden am Kopfstück, im Querschnitt des Profils;
- Fig. 33: den Verbinder gemäß Fig. 32 in einer perspektivischen Ansicht;
- Fig. 34: einen Verbinder mit einem anderem, stegförmigen Vorsprung, im Querschnitt des Profils,
- Fig. 35: zwei miteinander verbundene Baupaneele mit eingelegtem Verbinder gemäß Fig. 34, in einem Schnitt;
- Fig. 36: einen Abschnitt des Verbinders gemäß Fig. 34, in einer perspektivischen Ansicht;
- Fig. 37: einen Verbinder gemäß Fig. 34, jedoch mit geändertem Fuß, im Querschnitt des Profils,
- Fig. 38: zwei miteinander verbundene Baupaneele mit eingelegtem Verbinder gemäß Fig. 37, in einem Teilschnitt,
- Figuren 39 und 40: den Verbinder gemäß Fig. 37 in zwei perspektivischen Darstellungen;
- Fig. 41: einen Verbinder aufweisend herabstehende Zungen, im Querschnitt des Profils,
- Fig. 42: zwei miteinander verbundene Baupaneele mit eingelegtem Verbinder gemäß Fig. 41, in einem Teilschnitt,
- Fig. 43: den Verbinder gemäß Fig. 41 in einer perspektivischen Ansicht, mit sichtbaren Zungen;
- Fig. 44: den Verbinder gemäß Fig. 41 in einer Ansicht auf seine Innenseite;
- Figuren 45 und 46: den Verbinder gemäß Fig. 41 in Draufsicht auf die Seitenfläche seines Fußes sowie in Draufsicht von oben auf das Kopfstück;
- Fig. 47: einen Verbinder gemäß Fig. 41, jedoch mit geändertem Fuß, in einem Schnitt des Profils;
- Fig. 48: zwei miteinander verbundene Baupaneele mit eingelegtem Verbinder gemäß Fig. 47, in einem Teilschnitt;
- Fig. 49: den Verbinder gemäß Fig. 47 in einer Ansicht auf seine Innenseite;
- Figuren 50 und 51: den Verbinder gemäß Fig. 47 in Draufsicht auf die Seitenfläche seines Fußes sowie in Draufsicht von oben auf das Kopfstück;
- Fig. 52: einen Verbinder gemäß Fig. 37, jedoch mit geändertem Kopfstück, in einem Schnitt des Profils;
- Fig. 53: zwei miteinander verbundene Baupaneele mit eingelegtem Verbinder gemäß Fig. 453, in einem Teilschnitt;
- Fig. 54: einen Verbinder gemäß Fig. 37, jedoch mit anderer Variante des Kopfstücks, in einem Schnitt des Profils;
- Fig. 55: zwei miteinander verbundene Baupaneele mit eingelegtem Verbinder gemäß Fig. 54, in einem Teilschnitt;
- Fig. 56: einen Fußboden in einer perspektivischen Ansicht von oben.

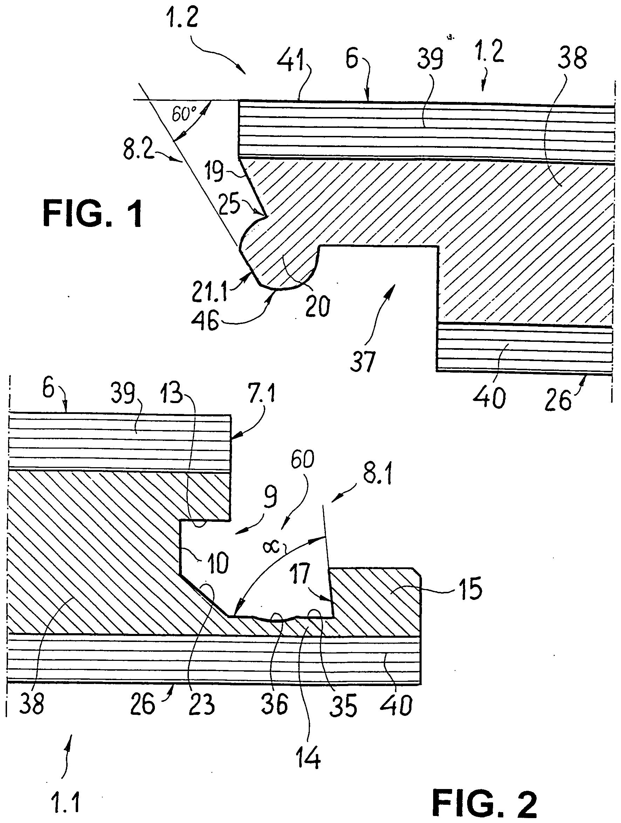

Die Figuren 1, 2 und 16 zeigen zwei Baupaneele 1.1, 1.2 vor und nach dem Herabschwenken des Baupaneels 1.2 (Gegenpaneel) in Richtung Untergrund 11, auf den das Baupaneel 1.1 bereits verlegt ist. Charakteristisch für die Figuren ist das Fehlen eines separaten Verbinders, der noch im Weiteren detailliert beschrieben werden wird.

Die beiden Baupaneele 1.1, 1.2 bestehen jeweils aus einer Nutzschicht 39, einer Bodenschicht 40 und einer dazwischen liegenden Kernschicht 38 aus Holzwerkstoff. Die Nutzschicht 39 ist mit einer Dekorschicht 41 versehen, deren Oberfläche eine Tritt- bzw. Nutzfläche 6 bildet. Die Bodenschicht 40 weist wiederum eine dem Untergrund 11 zugewandte Basisfläche 26 auf.

Das Baupaneel 1.1 zeichnet sich durch eine profilierte, durch die Nutz- und Basisflächen 6; 26 begrenzte Seitenfläche 8.1 aus, aufweisend eine Stoßfläche 7.1, eine gegenüber der Stoßfläche zurückversetzte, erste Nut 9 und einen über die Stoßfläche 7.1 hinausragenden Verriegelungsarm 14 mit einer nach oben abstehenden Lippe 15.

Die erste Nut 9 ist im Querschnitt polygonal und weist einen gegenüber der Stoßfläche 7.1 zurückversetzten Nutboden 10 auf, der parallel zur Stoßfläche 7.1 angeordnet ist und in eine obere, planparallel zur Nutzfläche 6 verlaufende Nutflanke 13 und eine schräg gerichtete untere Nutflanke 23 ausläuft. Die letztere geht wiederum in einen parallel zur Basisfläche 26 liegenden Boden 35 des Verriegelungsarms 14 über, wobei mitten am Boden 35 eine entlang der Seitenfläche 8.1 verlaufende Mulde 36 ausgefräst ist.

Die Lippe 15 des Verriegelungsarms 14 ist trapezförmig und verjüngt sich in Richtung Bodenschicht 40 derart, dass an der Lippe eine unter einem spitzen Winkel α zum Boden 35 geneigte Innenfläche 17 gebildet ist. Der Winkel α liegt in vorliegendem Fall zwischen 80° und 85° und kann variieren.

Wie die Fig. 1 zeigt, ist von dem Boden 35 des Verriegelungsarms 14, von der Innenfläche 17 der Lippe 15 und von der ersten Nut 9 bzw. von derer oberen Nutflanke 13 ein Sitz 60 zur Unterbringung des Verbinders gebildet.

Das Baupaneel 1.2 zeichnet sich durch eine profilierte, durch die Tritt- und Basisflächen 6, 26 begrenzte Seitenfläche 8.2 aus, aufweisend eine Stoßfläche 7.2, eine gegenüber der Stoßfläche 7.2 zurückversetzte Schräge 19 und eine nach unten gerichtete Verriegelungswalze 20. Die Schräge 19 bildet zusammen mit der Verriegelungswalze 20 einen tiefen, scharfen, V-förmigen Übergang 25.

An der Verriegelungswalze 20 ist eine Andrückfläche 21.1 gefräst, die mit der Nutzfläche 6 einen spitzen Winkel bildet und annährend parallel zur Schräge 19 angeordnet ist. Der scharfe Winkel beträgt vorzugsweise 60°. Die Verriegelungswalze 20 schließt sich an eine nach unten offene Ausnehmung 37 zur Aufnahme der Lippe 15 des Baupaneels 1.1 an.

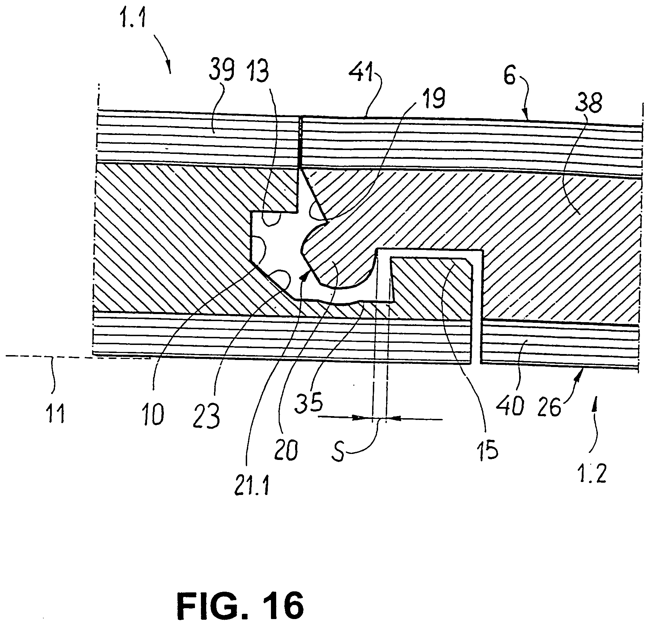

In Fig. 16 ist ein relativ breiter Spalt S zwischen der Verriegelungswalze 20 und der Lippe 15 zu sehen, wenn die beiden Stoßflächen 7.1, 7.2 miteinander kontaktieren. Die Baupaneele 1.1, 1.2 sind dabei miteinander weder in horizontaler, noch in vertikalen Richtung verriegelt.

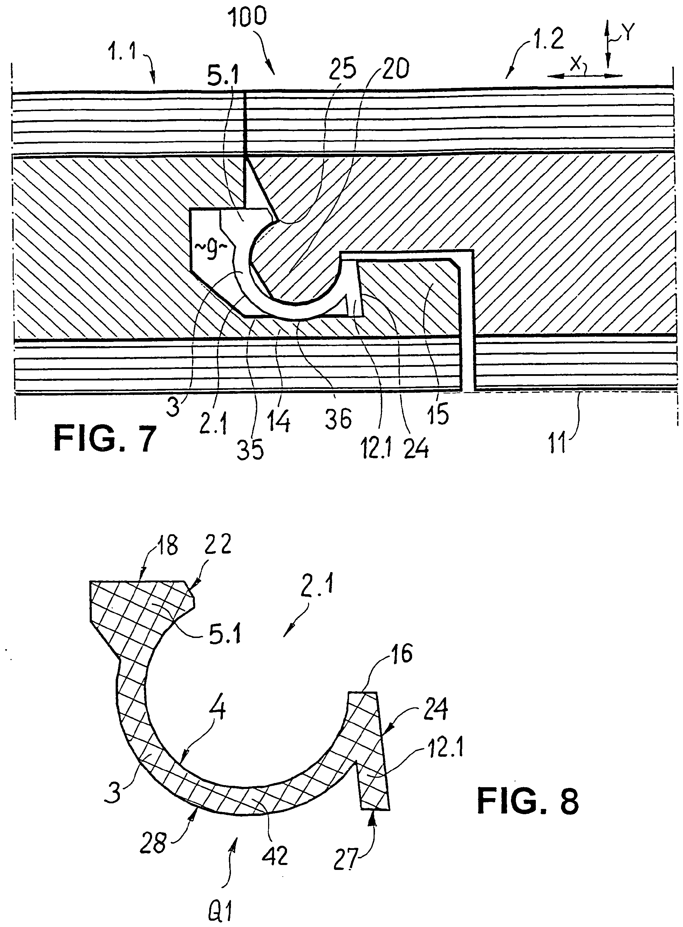

Eine ähnliche Lage der auf den Untergrund 11 verlegten Baupaneele 1.1, 1.2 ist der Fig. 7 zu entnehmen. Allerdings ist hier ein separater Verbinder 2.1 (Profil) eingesetzt, derart, dass der Spalt S (vgl. Fig. 16) völlig von einem stegförmigen Fuß 12.1 des Profils ausgefüllt ist. Die Baupaneele 1.1, 1.2 bilden samt eingelegtem Profil 2.1 eine Einrichtung 100, bei der das Profil eine Verriegelung in beiden Richtungen (vgl. Fig. 7, Pfeile X, Y) bewirkt.

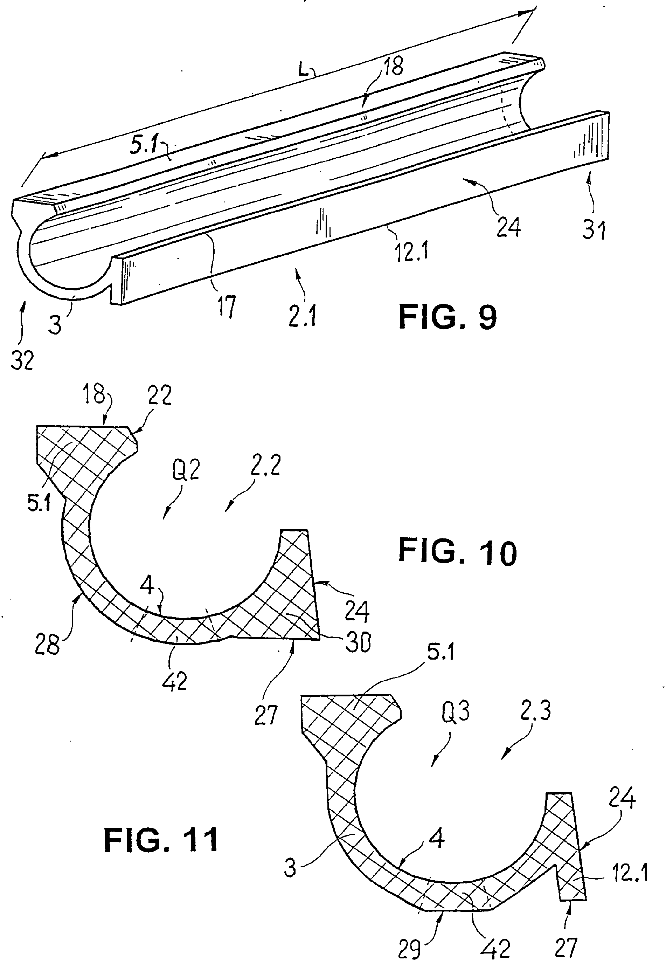

Das etwa dachrinnenförmige Profil 2.1 (vgl. Figuren 8 und 9) weist einen Querschnitt Q1 auf, auf dem eine teilzylindrische Innenfläche 4, eine ebenso teilzylindrische Außenfläche 28, ein Kopfstück 5.1 und der Fuß 12.1 zu erkennen sind. Die Innen- und Außenflächen 4, 28 begrenzen eine rinnenförmige Wandung 3, die vom Kopfstück 5.1 bis zum Fuß 12.1 reicht.

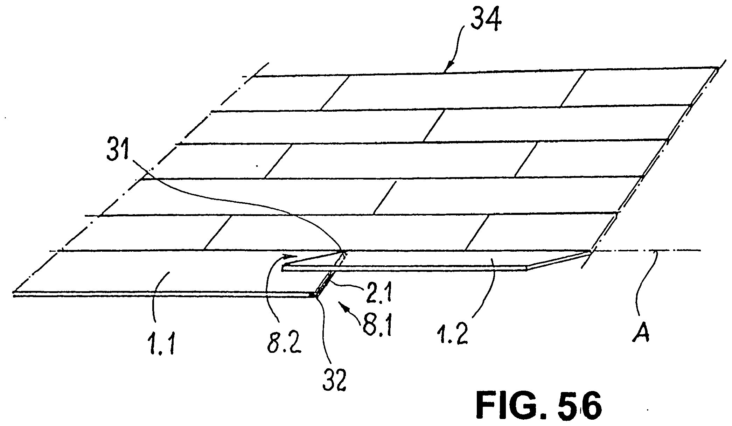

Das in Fig. 9 gezeigtes Profil 2.1 ist relativ kurz und daher für die Schmalseiten der Baupaneele bestimmt. Seine Länge L entspricht im Wesentlichen dem Ausmaß der Schmalseite oder ist geringfügig kleiner. Ein in Fig. 56 schematisch angedeuteter Fußboden 34 setzt sich aus mehreren oben beschriebenen Baupaneelen 1.1, 1.2 zusammen, die an ihren Schmalseiten über die separaten Verbinder und an Längsseiten über herkömmliche, nicht dargestellte Nut-Feder-Verbindungen verriegelt sind.

Der Fuß 12.1 weist eine geneigte Seitenfläche 24 auf, deren Neigungswinkel dem Winkel α (vgl. Fig. 2) gleich ist. Ferner weist der Fuß 12.1 eine Standfläche 27 und einen der Standfläche 27 gegenüberliegenden, länglichen, oberen Rand 16 auf, der sich an die besagte teilzylindrische Innenfläche 4 anschließt.

Ein wesentliches Merkmal des Kopfstücks 5.1 ist seine obere Druckfläche 18, die innenseitig von einer weiteren, schrägen Gleitfläche 22 begrenzt ist.

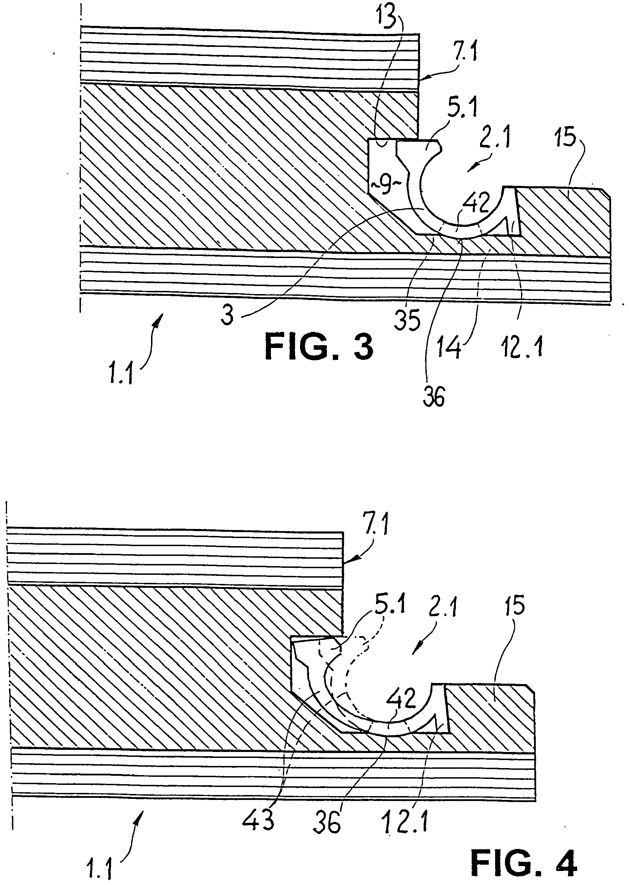

Das in das Baupaneel 1.1 eingepresste Profil 2.1 ist auch in Figuren 3 und 4 gezeigt. Das Kopfstück 5.1 steht in Kontakt mit der oberen Nutflanke 13 und ragt über die Stoßfläche 7.1 hinaus. Der Fuß 12.1 stützt sich mit seiner Standfläche 27 am Boden 35 und mit seiner Seitenfläche 24 an der Innenfläche 17 der Lippe 15 ab. Die Wandung 3 stützt sich wiederum mit ihrem bogenförmigen, unteren Basisteil 42 an der Mulde 36 (vgl. Fig. 3) ab. Auf diese Weise ist das Profil 2.1 am Baupaneel 1.1 festgelegt und vor dem Herausfallen aus dem Sitz 60 gesichert.

Wie die Fig. 4 zeigt, ist ein bis zum Basisteil 42 reichender Schenkel 43 der Wandung 3 flexibel. Da der Schenkel 43 das Kopfstück 5.1 trägt, ist das letztere auch gegenüber dem Basisteil 42 verschwenkbar bzw. drehbar angeordnet.

In Figuren 5, 6 und 56 ist das Herabschwenken des Gegenpaneels 1.2 auf den Untergrund 11 gezeigt. Das Gegenpaneel wird um die Schwenkachse A (vgl. Fig. 56) gedreht. In der in Fig. 5 dargestellten Lage fährt die Verriegelungswalze 20 nach unten. Sie gleitet über die Stoßfläche 7.1 des bereits verlegten Baupaneels 1.1, bis sie mit ihrer schrägen Andrückfläche 21 gegen das Kopfstück 5.1 stößt (vgl. Figuren 5 und 6). Danach gleitet die Verriegelungswalze 20 mit ihrer Andrückfläche 21 über die in Fig. 8 gezeigten Druck- und Gleitflächen 22, 18 des Kopfstücks, bis dieses in Richtung Nutboden 10 verschwenkt wird und gelangt in die in Fig. 7 gezeigte Verriegelungsstellung, bei der das Kopfstück 5.1 in den v-förmigen Übergang 25 der Schräge 19 zur Verriegelungswalze 20 einspringt.

Dabei unterliegt das Profil 2.1 beim Herabschwenken des Gegenpaneels 1.2 in Richtung Boden 35 des bereits verlegten Baupaneels 1.1 einer Torsion, bei der das Kopfstück 5.1 nach und nach derart gedreht wird, dass zuerst ein der Schwenkachse A des Baupaneels zugewandtes Ende 31 und anschließend ein zweites Ende 32 des Profils komplett unter die obere Nutflanke 13 gelangen. Unter Torsion soll in vorliegendem Fall die Verwindung nur eines Teils des Profils, nämlich des Schenkels 43 und des Kopfstücks 5.1 verstanden werden, während der Fuß 12.1 in seiner Lage unbeweglich verbleibt.

Die Fig. 10 zeigt einen Verbinder 2.2, der ähnlich wie der Verbinder 2.1 aufgebaut ist mit dem Unterschied, dass anstelle eines stegförmigen ein massiver Fuß 30 vorgesehen ist. Dies Profil zeigt einen Querschnitt Q2, bei dem die Standfläche 27 des massiven Fußes 30 bis zum Basisteil 42 reicht. Das Profil 2.2 kann anstelle des Profils 2.1 eingesetzt werden (nicht dargestellt).

Eine andere ähnliche Profil-Ausführungsform (Bezugszahl 2.3) zeigt einen Querschnitt Q3 gemäß Fig. 11. Die Wandung 3 weist an ihrem mittigen Segment, d.h. an ihrem Basisteil 42, eine ebene untere Fläche 29 auf. Ein nicht dargestellter Boden des Verriegelungsarms 14 verfügt über eine angepasste Fläche (nicht dargestellt) für das Profil 2.3.

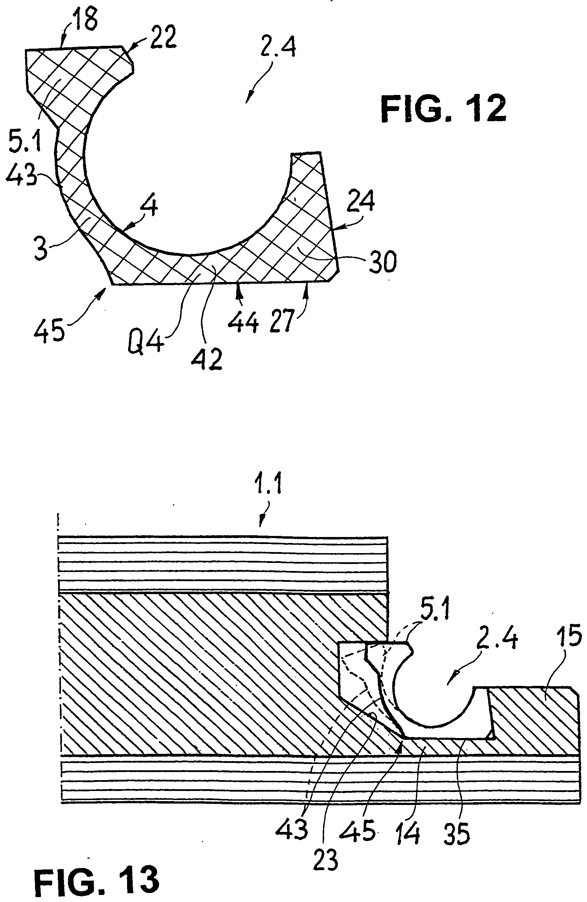

Die Fig. 12 zeigt einen Querschnitt Q4 eines weiteren Profils 2.4, bei dem der massive Fuß 30 über den unteren Basisteil 42 des Profils sich an den bogenförmigen, verschwenkbaren Schenkel 43 anschließt, derart, dass die untere, ebene Standfläche 27 bis zum besagten Schenkel 43 reicht. Gemäß Fig. 13 ist das Profil 2.4 mit seiner Standfläche 27 auf den ebenso flachen Boden 35 des Verriegelungsarms 14 gelegt. Die Breite des Bodens 35 ist der der Standfläche 27 gleich. So ist der Schenkel 43 um einen Übergangsbereich 45 des Profils, der dem Übergang des Bodens 35 in die schräge Nutflanke 23 entspricht, verschwenkbar.

Die Fig. 14 zeigt einen Querschnitt Q5 eines anderen Profils 2.5, welches dem Profil 2.4 nahezu identisch ist. Allerdings ist das Profil 2.5 in seinem Übergangsbereich 45 zum Schenkel 43 abgestuft. Der Basisteil 42 des Profils 2.5 weist eine ebene, untere Außenfläche 44 auf, die sich zwischen der Seitenfläche 24 der Lippe 15 und einer Abstufung 51 der Wandung 3 erstreckt. Die Abstufung 51 am Profil 2.5 passt zu einer relativ niedrigen Nutflanke 33.1 einer am Boden des Verriegelungsarms 14 eingearbeiteten Nut 61 (vgl. Fig. 15). Der in die Nut 61 eingesetzte Verbinder 2.5 drückt auch mit seinem Kopfstück 5.1 gegen die obere Nutflanke 13 der ersten Nut 9. Auf dieser Weise ist der Verbinder 2.5 lagesicher im Sitz des Baupaneels 1.1 platziert bei Belassung der erforderlichen Beweglichkeit seines das Kopfstück 5.1 tragenden Schenkels 43.

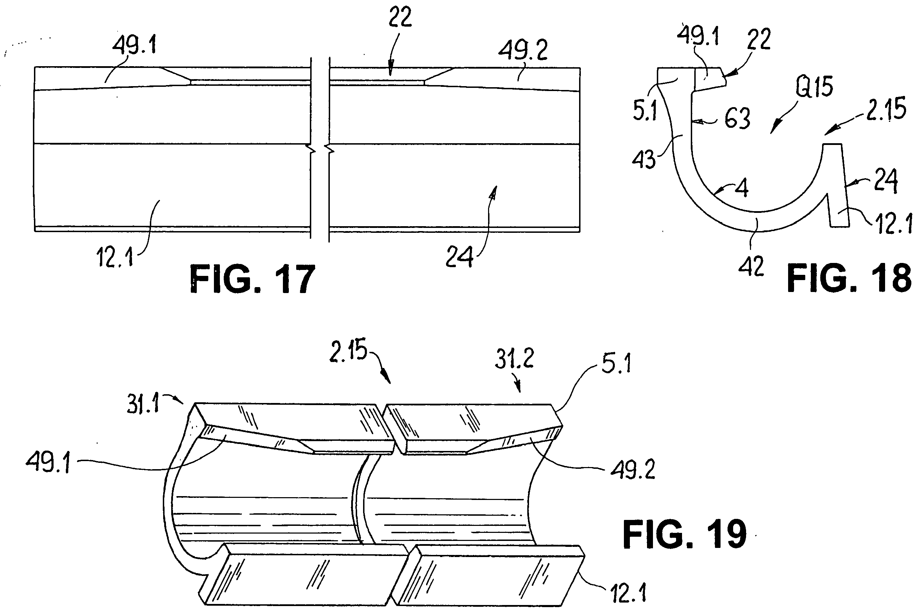

Die Fig. 18 zeigt einen weiteren Querschnitt (Bezugszeichen Q15) eines Profils 2.15, bei dem sich um eine Weiterentwicklung des in Fig. 8 dargestellten Profils 2.8 handelt. Die teilzylindrische Innenfläche 4 des Profils 2.15 geht von oberem Rand 16 des Fußes 12.1 beginnend in einen ebenen, bis zum Kopfstück 5.1 reichenden Flächenabschnitt 63 über.

Wie die Figuren 17 und 19 zeigen, ist das Kopfstück 5.1 an beiden Enden 31, 32 des Profils 2.7 jeweils abgeschrägt, wobei sich eine Einführungskante 49.1, 49.2 ergibt.

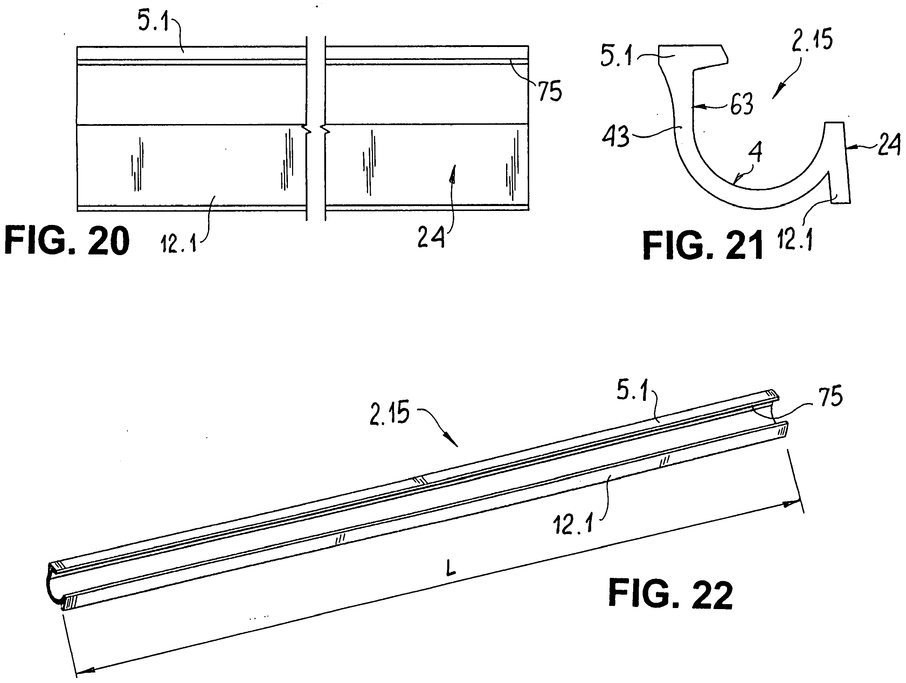

Das Profil 2.15 ist auch in Figuren 20, 21 und 22 gezeigt. Eine am Kopfstück 5.1 angeordnete, freie Innenkante 75 verläuft geradlinig entlang der Gesamtlänge L des Verbinders und weist keine Einführungskanten auf. Sonst ist das Profil mit dem in Figuren 17 bis 19 gezeigten identisch.

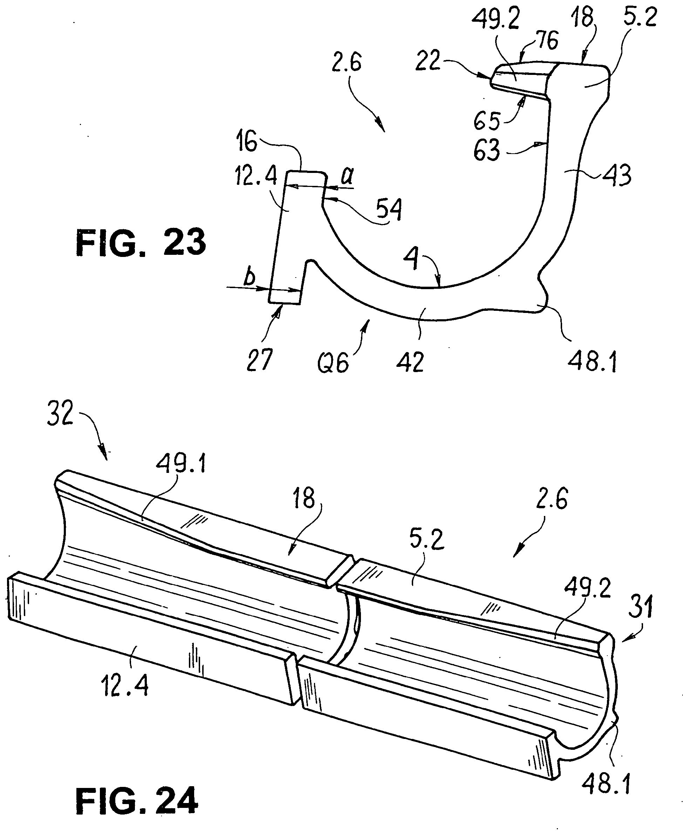

In Fig. 23 ist ein Querschnitt Q6 eines weiteren Profils 2.6 dargestellt. Die etwa teilzylindrische Innenfläche 4 des Profils 2.6 geht einerseits in eine plane, streifenförmige Innenfläche 54 in den länglichen Rand 16 eines Fußes 12.4 und andererseits in den planen, bis zu einem Kopfstück 5.2 reichenden Flächenabschnitt 63 über.

Der Fuß 12.4 weist zwei Dickenmaße auf: eine Dicke a im oberen Randbereich und eine kleinere Dicke b im unteren, mit der Standfläche 27 endenden Bereich.

Das Kopfstück 5.2 weist die vorgenannte Druckfläche 18 und Gleitfläche 22 auf, jedoch ist auf beiden Enden 31, 32 des Profils mit abgeschrägten Einführungskanten 49.1, 49.2 (vgl. Fig. 24) versehen. Außerdem ist dem Querschnitt Q6 zu entnehmen, dass die obere, plane Druckfläche 18 über einen leicht abfallenden Abschnitt 76 in die Gleitfläche 22 übergeht.

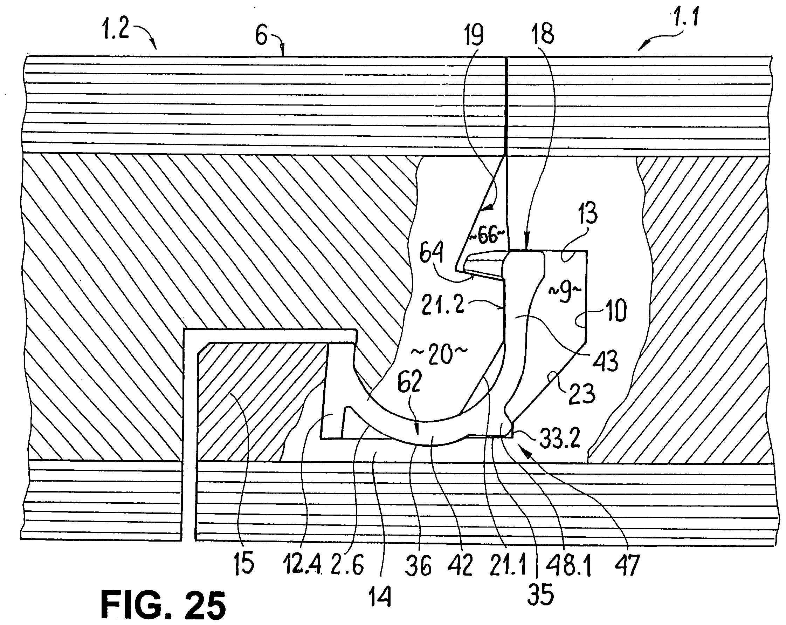

Ferner weist das Profil 2.6 einen nach außen ragenden, in Längsausrichtung des Profils verlaufenden, wulstartigen Vorsprung 48.1 auf, der sich in einem Übergangsbereich 47 des Basisteils 42 zum beweglichen Schenkel 43 befindet. Wie die Fig. 25 zeigt, steht der Vorsprung 48.1 im eingesetzten Zustand in Kontakt mit dem Boden 35 des Verriegelungsarms 14 und mit einer senkrecht zum Boden 35 angeordneten, relativ niedrigen Nutflanke 33.2 einer Nut 62. Die Nut 62 ist durch die genannte Nutflanke 33.2, die Innenfläche 17 der Lippe 15 und den Boden 35 mit der Mulde 36 definiert.

Die Verriegelungswalze 20 (vgl. Fig. 25) ist durch die schräge Andrückfläche 21.1, eine sich an die Andrückfläche 21.1 anschließende, senkrecht zur Nutzfläche 6 angeordnete, zweite Andrückfläche 21.2 sowie durch eine geneigte Stützfläche 64 begrenzt, an der sich das Kopfstück 5.2 mit seiner unteren Fläche 65 abstützt. Die geneigte Stützfläche 64 bildet zusammen mit der Schräge 19 eine unsymmetrische, V-förmige Nut 66, in die das Kopfstück 5.2 derart eingeführt wird, dass es mit seiner Druckfläche 18 die obere Nutflanke 13 der ersten Nut 9 und mit seiner unteren Druckfläche 65 die geneigte Stützfläche 64 kontaktiert. Außerdem steht der plane Flächenabschnitt 63 des Schenkels 43 mit der Andrückfläche 21.2 der Verriegelungswalze 20 in Kontakt (nach der Einführung der Verriegelungswalze 20; vgl. Fig. 25).

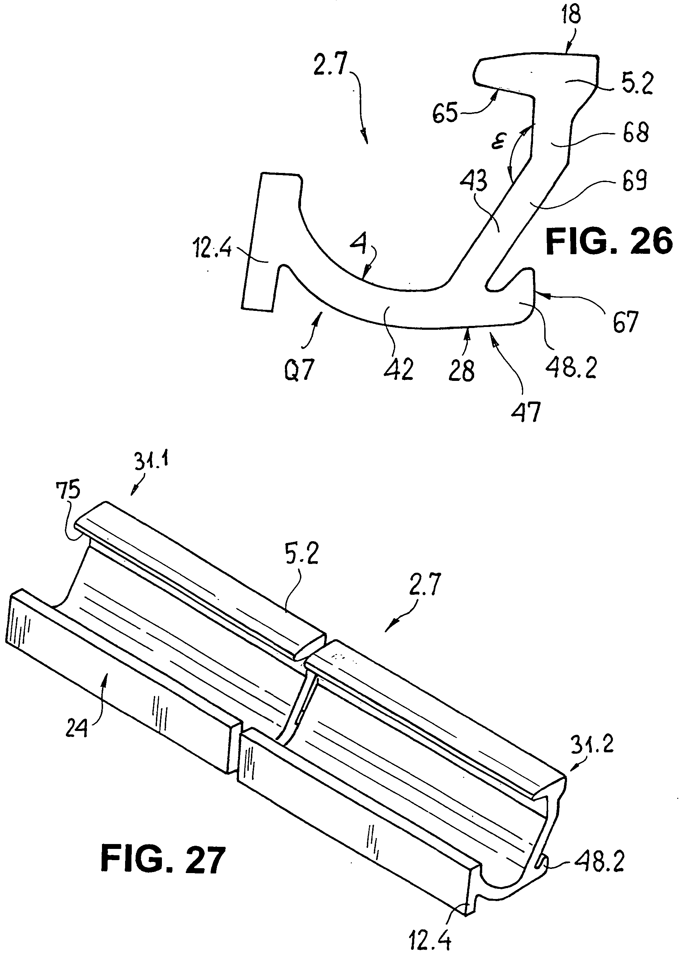

Der Fig. 26 ist ein Querschnitt Q7 eines weiteren, mit einem Vorsprung 48.2 versehenen Profils 2.7 zu entnehmen, das die bei der Fig. 23 beschriebenen Teile, das Kopfstück 5.2 und den Fuß 12.4, aufweist. Die Außenfläche 28 am Basisteil 42 setzt sich fort bis zu einer Seitenfläche 67 des Vorsprungs 48.2 an seinem freien Ende. Der Vorsprung 48.2 verjüngt sich in Richtung Übergangsbereich 47 des Schenkels 43 zum Basisteil 42. Der Schenkel 43 selbst weist einen oberen, das Kopfstück 5.2 tragenden, geraden Schenkel-Abschnitt 68 und einen unteren, sich an das Basisteil 42 anschließenden geraden Schenkel-Abschnitt 69 auf. Die beiden Schenkel-Abschnitte 68 und 69 sind zueinander unter einem stumpfen Winkel ε angeordnet, der im vorliegenden Fall etwa 150° beträgt.

Wie die Fig. 27 zeigt, weist das Kopfstück 5.2 ebenso die geradlinig verlaufende Innenkante 75 auf.

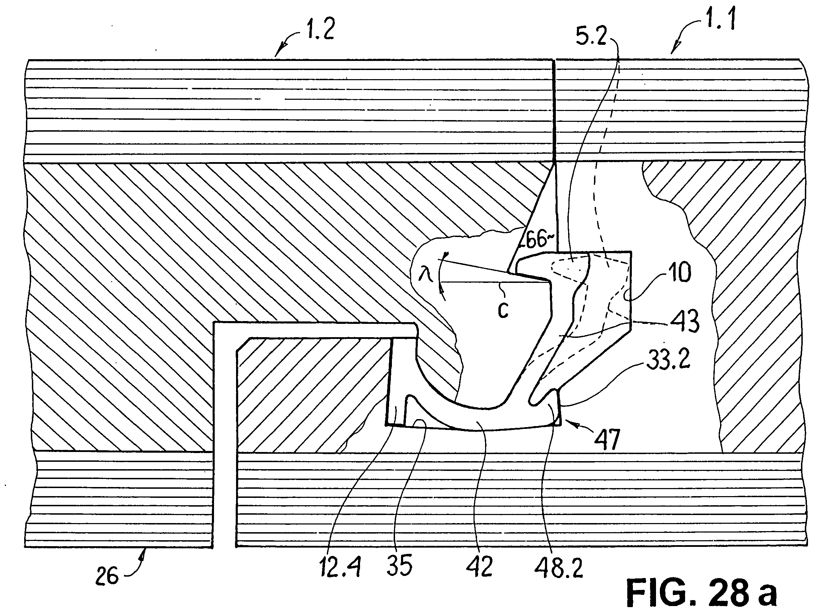

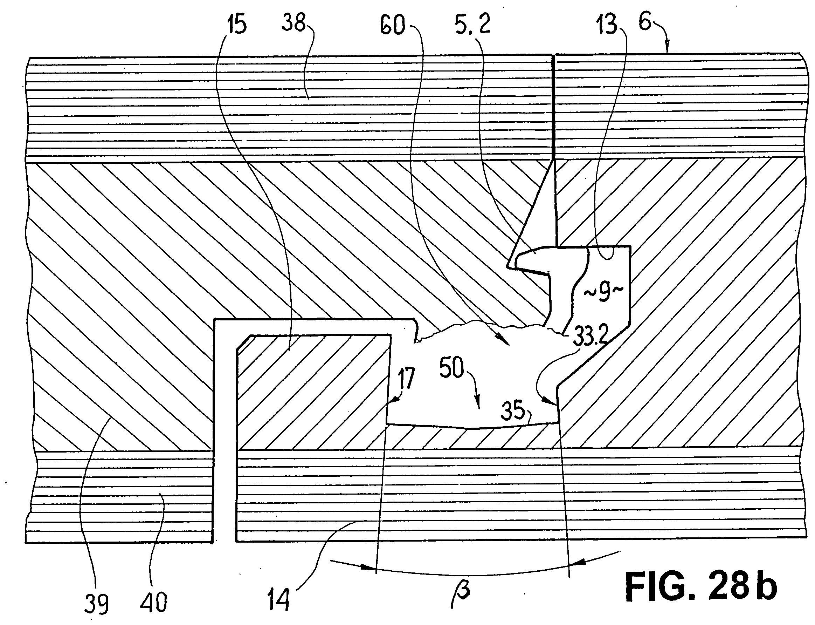

Der Einsatz von Profil 2.7 ist in Figuren 28a und 28b gezeigt. Der Boden 35 des Verriegelungsarms 14 ist leicht konkav und bildet zusammen mit der Innenfläche 17 der Lippe 15 und der der Lippe gegenüber liegenden Nutflanke 33.2 die Nut 50 (vgl. Fig. 28b). Die Nutflanke 33.2 und die Innenfläche 17 der Lippe 15 sind zueinander geneigt und bilden einen spitzen Winkel β. Der Winkel β liegt in vorliegenden Ausführungsbeispiel im Winkelbereich 5° bis 10° und kann etwas variieren.

Der Sitz 60 (vgl. Fig. 28b) für die Unterbringung des Verbinders 2.7 ist auch bei dieser Ausführung vorhanden. Er ist durch die erste Nut 9 und durch die geneigte Innenfläche 17 der Lippe 15 und durch den Boden 35, gegebenenfalls die Nut 50 des Verriegelungsarms 14 gebildet. Dabei drückt das in den Sitz 60 eingesetzte Profil 2.7 mit seinem Kopfstück 5.2 gegen die obere Nutflanke 13 der ersten Nut 9.

Die Verriegelungswalze 20 (vgl. Fig. 28a) ist ähnlich wie bei der Ausführungsform gemäß Fig. 25 aufgebaut. Allerdings ist nicht nur die Innenfläche 4 des Profils 2.7, sondern auch der Schenkel 43 mit seinen Schenkel-Abschnitten 68 und 69 an die Form der Verriegelungswalze 20 angepasst. Das Kopfstück 5.2 greift in die V-förmige Nut 66 ein und stütz sich mit seiner unteren Druckfläche 65 an der Stützfläche 64 der Nut 66 ab. Die Stützfläche 64 ist unter einem spitzen Winkel λ gegenüber der Basisfläche 26 geneigt. Eine den Winkel λ begrenzende Gerade c (vgl. Fig. 28a) bildet die Basisfläche 26 ab. Der Winkel λ beträgt im vorliegenden Fall etwa 10°. Dieselbe Anordnung des Kopfstücks 5.2 in eingesetztem Zustand gilt auch für die Ausführung gemäß Figuren 23 bis 25.

In dieser Weise ist der Verbinder 2.7 lagesicher im Sitz 60 des Baupaneels 1.1 untergebracht bei Belassung der erforderlichen Beweglichkeit seines das Kopfstück 5.2 tragenden Schenkels 43.

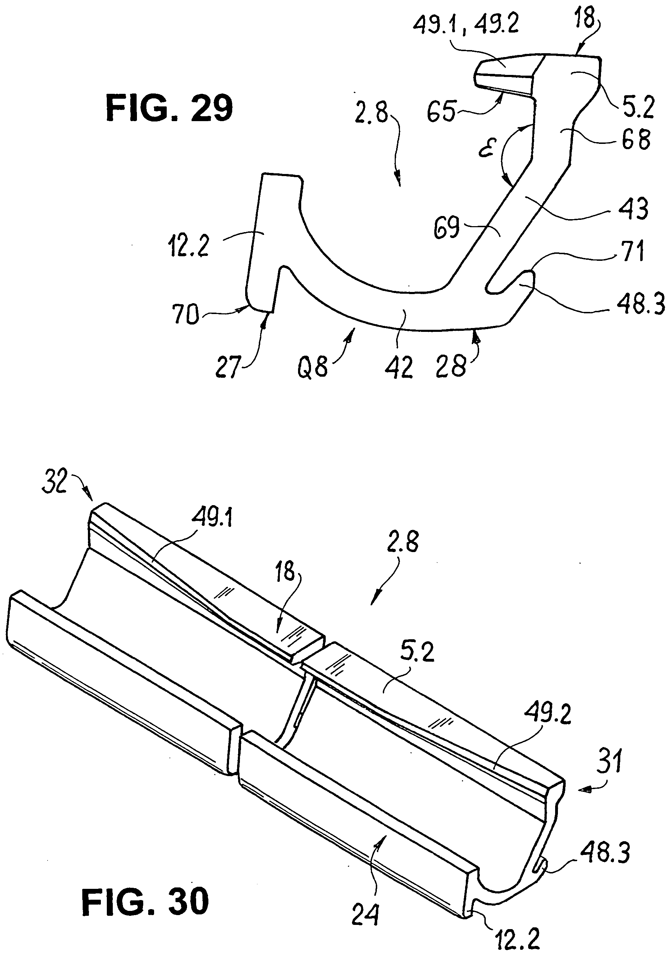

Die Fig. 29 zeigt einen Querschnitt Q8 eines Profils 2.8, das dem Profil 2.7 ähnlich ist. Dieselbe Bezugszeichen bezeichnen gleiche Teile. Das Profil 2.8 weist einen Fuß 12.2 auf, der sich von dem Fuß 12.4 durch eine Abrundung 70 unterscheidet. Ein nach außen ragende Vorsprung 48.3 zeigt mit seinem freien, abgebogenen Ende 71 nach oben. Der Vorsprung 48.3 kann als stegförmig bezeichnet werden.

Wie die Fig. 30 zeigt, ist das Kopfstück 5.2 an beiden Enden 31, 32 des Profils 2.8 jeweils von einer Einführungskante 49.1, 49.2 abgeschrägt.

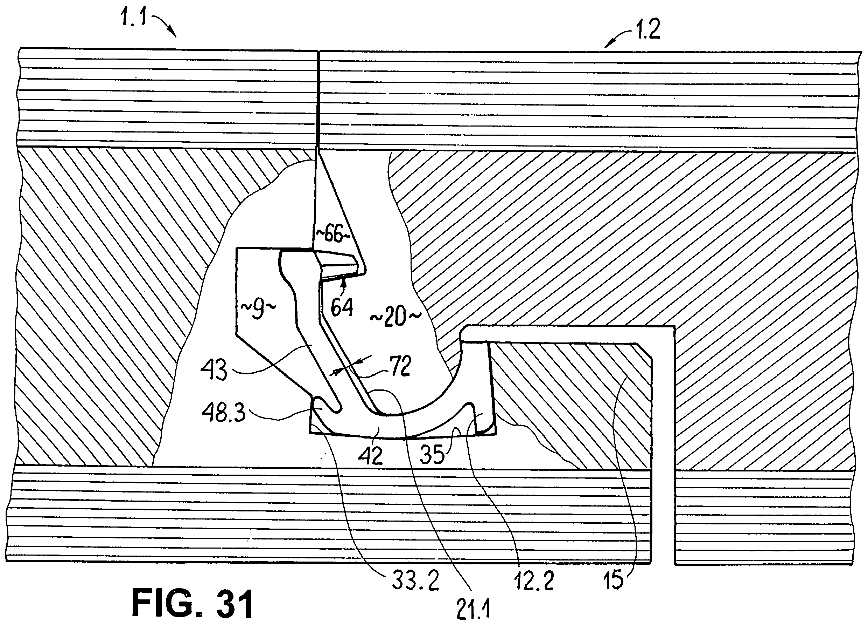

Der Einsatz des Profils 2.8 ist in Fig. 31 gezeigt. Das Profil 2.8 ist mit seinem Basisteil 42 ebenso, wie bei der Ausführung gemäß Fig. 28a, in die Nut 50 eingepresst. Das Kopfstück 5.2 greift im eingesetzten Zustand in die V-förmige Nut 66 ein und stützt sich mit seiner unteren Druckfläche 65 an der Stützfläche 64 der Nut 66 ab. Zwischen der schrägen Andrückfläche 21.1 der Verriegelungswalze 20 und dem Schenkel 43 verbleibt ein geringfügiger Spalt 72.

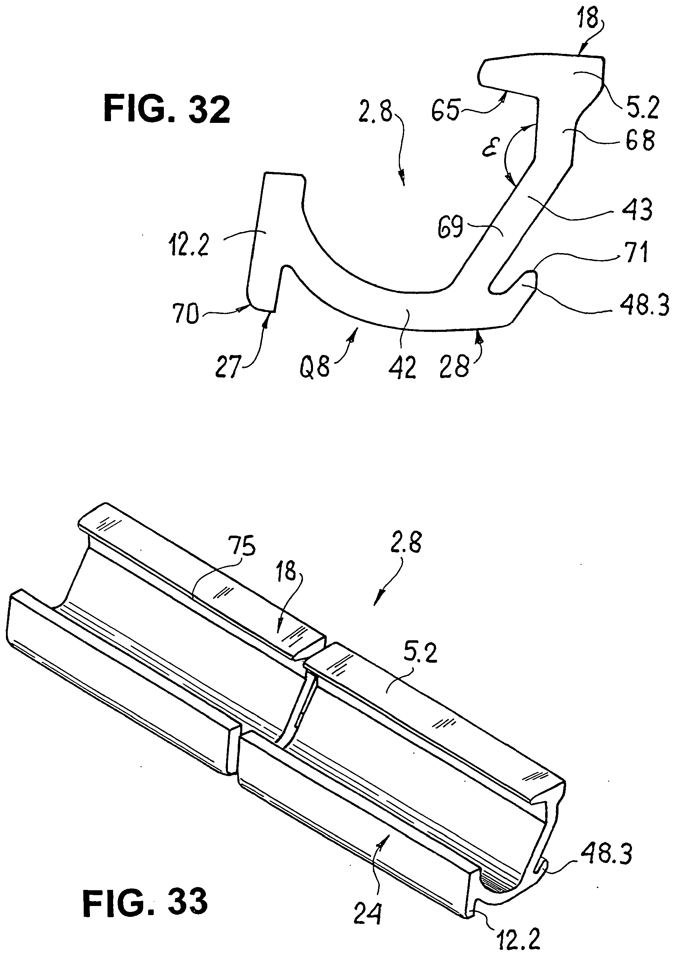

Gemäß Figuren 32 und 33 ist das gleiche Profil 2.8 ohne Einführungskanten dargestellt. Demnach weist das Kopfstück 5.2 die geradlinig verlaufende Innenkante 75 auf.

Die nachfolgenden Figuren stellen besonders vorteilhafte Ausführungsformen der Erfindung dar.

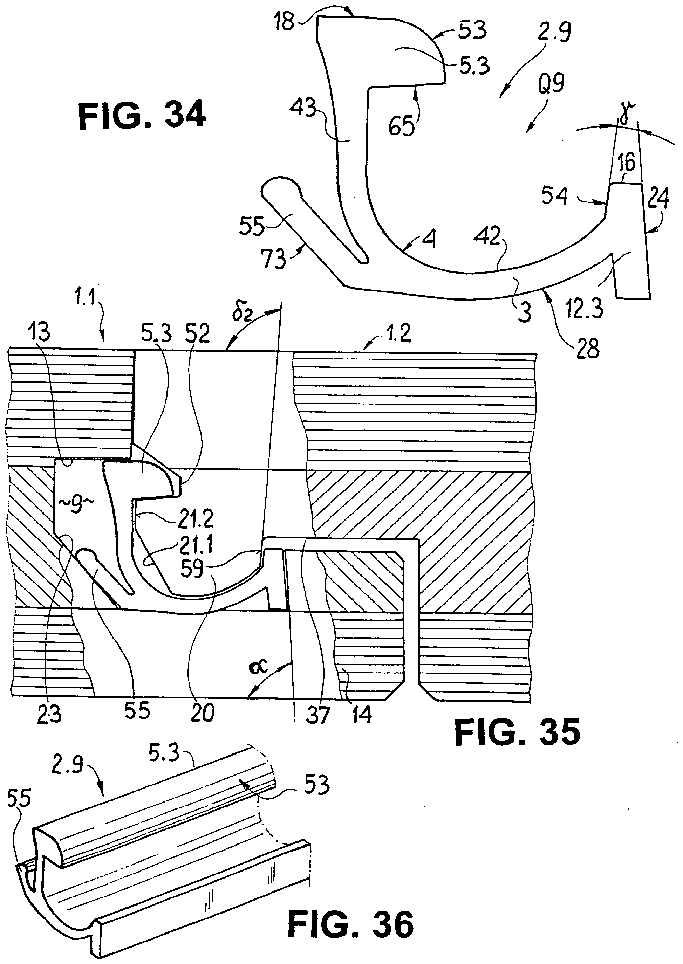

So zeigt die Fig. 34 einen Querschnitt Q9 eines Profils 2.9, das anstelle des Vorsprungs einen nach außen ragenden, stabilisierenden Steg 55 aufweist, der deutlich höher als der in Fig. 29 gezeigte Vorsprung 48.3 ist. Der Steg 55 ist elastisch verformbar, so dass sich mit seiner Außenfläche 73 - im eingesetzten Zustand - an der schrägen Nutflanke 23 der Nut 9 unter Verspannung abstützen kann. Diese Situation ist der Fig. 35 zu entnehmen. Der Schenkel 43 endet mit einem Kopfstück 5.3, das die obere Druckfläche 18 sowie eine in Figuren 34 und 36 deutlich gezeigte, abgerundete Gleitfläche 53 aufweist. Das Kopfstück 5.3 zeichnet sich auch durch die vorgenannte untere Druckfläche 65 aus, die im einmontierten Zustand (vgl. Fig. 35) leicht nach oben geneigt ist und denselben, bei der Fig. 28a gezeigten Winkel λ bildet.

Das Basisteil 42 des Kopfstücks 5.3 endet mit einem Fuß 12.3, dessen obere Innenfläche 54 mit der Seitenfläche 24 einen spitzen Winkel y bildet. So verjüngt sich der Fuß 12.3 in seinem oberen Bereich in Richtung Rand 16. Die Innenfläche 4 der Wandung 3 sowie die abgerundete untere Oberfläche der Verriegelungswalze 20 sind teilelliptisch. Die Verriegelungswalze 20 ist einerseits durch die ebenen Andrückflächen 21.1; 21.2 und andererseits durch eine ebene Innenfläche 59 begrenzt, die in die vorgenannte, nach unten offene Ausnehmung 37 am Baupaneel 1.2 übergeht.

Fährt die Verriegelungswalze 20 nach unten, drückt sie mit ihren Andrückflächen 21.1; 21.2 gegen die abgerundete Gleitfläche 53 des Kopfstücks 5.3, bis dieses in die trapezförmige Nut 52 eingreift und der Schenkel 43 in Kontakt mit der Andrückfläche 21.2 gebracht wird. Dabei steht die Innenfläche 59 der Verriegelungswalze 20 mit der oberen Innenfläche 54 des Fußes 12.3 in Kontakt. Die miteinander kontaktierenden Innenflächen 54; 59 bilden mit der Nutzfläche 6 der Baupaneele einen in Fig. 35 gezeigten stumpfen Winkel δ₂. Die Ausnehmung 37 breitet sich in ihrem oberen Bereich leicht nach unten aus.

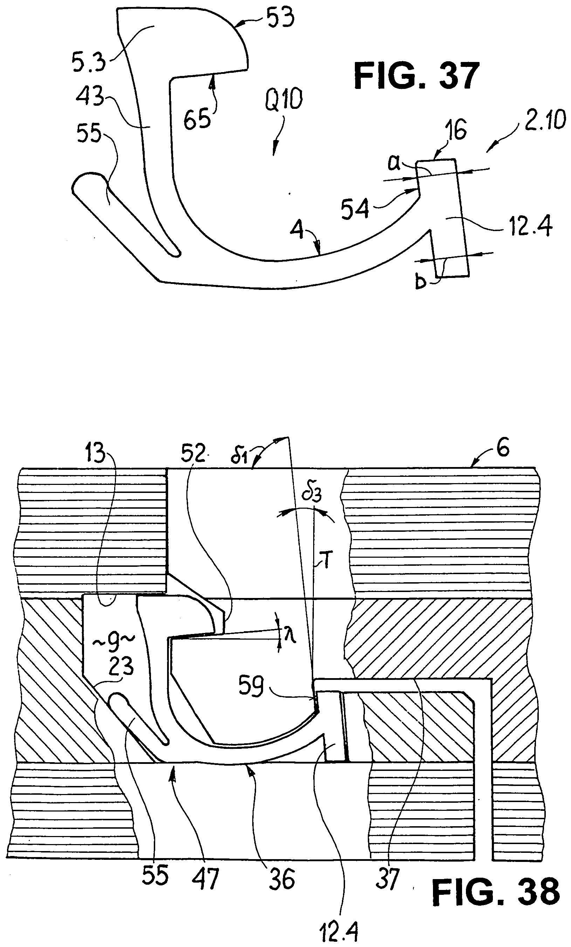

Ein in Fig. 37 gezeigter Querschnitt Q10 beschreibt ein Profil 2.10, bei dem der bereits in Fig. 23 dargestellte Fuß 12.4 vorhanden ist. Sonst weist das Profil 2.10 dieselbe Teile, wie das Profil 2.9 (vgl. Fig. 34) auf und ist mit denselben Bezugszeichen bezeichnet.

Das Kopfstück 5.3 weist ebenso die leicht nach oben geneigte, untere Druckfläche 65 auf, die im eingesetzten Zustand (vgl. Fig. 38) an die Innenfläche 59 der Verriegelungswalze 20 angepasst ist und mit dieser kontaktiert. Die Innenfläche 59 der Verriegelungswalze 20 bildet zugleich eine Nutflanke der Ausnehmung 37. Wie aus der Fig. 38 ersichtlich, verjüngt sich die Ausnehmung 37 leicht nach unten. Daraus resultiert, dass die beiden miteinander kontaktierenden Innenflächen 54, 59 unter einem spitzen Winkel δ₁ gegenüber der Nutzfläche 6 angeordnet sind. Wenn man eine Senkrechte T zur Nutzfläche 6 zieht, liegen die genannten Innenflächen 54, 59 unter einem spitzen, komplementären Winkel δ₃ gegenüber der Senkrechten T, wobei die Summe von beiden Winkeln δ₁, δ₃ 180° beträgt.

Die untere Druckfläche 65 des abgerundeten Kopfstücks 5.3 ist unter dem bereits erwähnten, spitzen Winkel λ gegenüber der Basisfläche 26 geneigt.

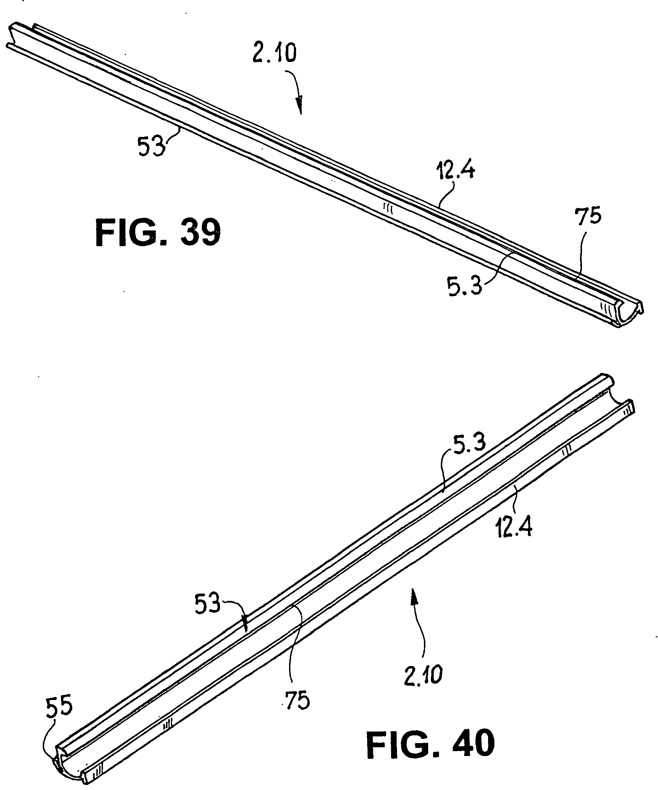

In Figuren 39 und 40 ist das Profil 2.10 in zwei perspektivischen Ansichten dargestellt. Die Figuren zeigen, dass das Kopfstück 5.3 ebenso die geradlinig verlaufende Innenkante 75 ohne Einführungskanten aufweist.

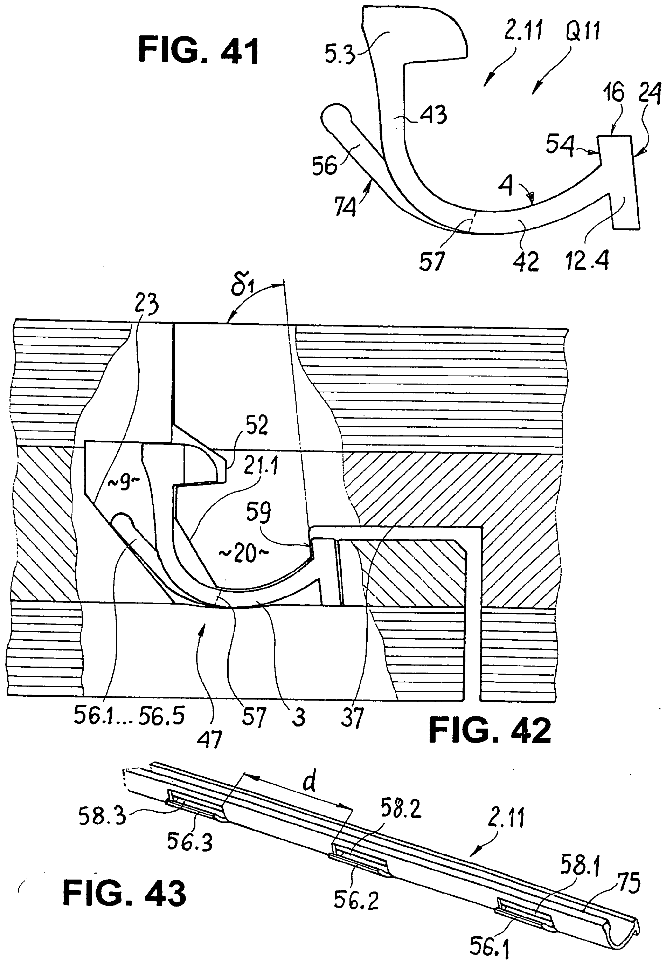

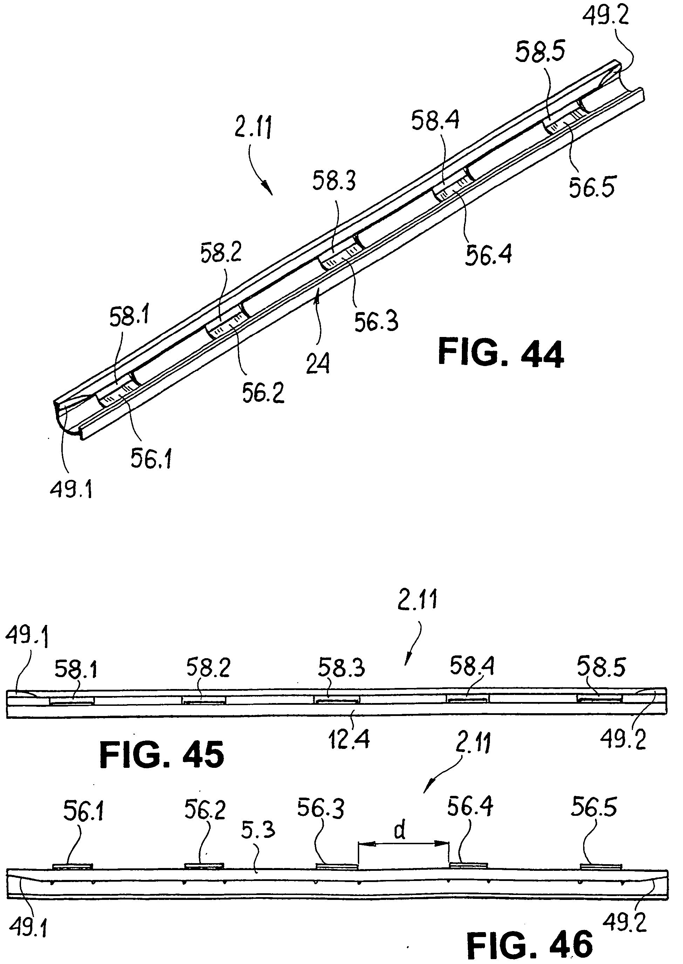

In Fig. 41 ist ein Querschnitt Q11 eines weiteren, mit 2.11 bezeichneten Profils dargestellt. Das Profil 2.11 ist in weiteren Figuren 43 und 44 in perspektivischen Darstellungen und in Figuren 45, 46 in Draufsicht auf das Innere des Profils und auf die Oberseite des Kopfstücks 5.3 gezeigt. Die Innenfläche 4 der Wandung 3 sowie die abgerundete untere Oberfläche der Verriegelungswalze 20 sind teilelliptisch.

Ein wesentliches Merkmal des Profils 2.11 sind nach außen ragende, federelastisch verformbare, rechteckige Zungen 56.1, 56.2, 56.3, 56.4, 56.5, die aus einem Übergangsbereich 47 (vgl. Fig. 42) des Basisteils 42 zum beweglichen Schenkel 43 ausgehend schräg gegenüber dem unverformten Schenkel 43 liegen. Die Zungen 56.1, 56.2, 56.3, 56.4, 56.5 sind in einem Materialstück mit dem Profil 2.11 im Spritzgussverfahren gefertigt. Darüber hinaus ist vorteilhaft, dass die herabstehenden Zungen 56.1, 56.2, 56.3, 56.4, 56.5 jeweils ein Fenster 58.1, 58.2, 58.3, 58.4, 58.5 im Material der Wandung 3 bilden.

Wie die Figuren 44, 45 und 46 zeigen, ist das Profil 2.11 mit zwei Einführungskanten 49.1, 49.2 versehen. Die Ausführung des Profils 2.11 gemäß Fig. 43 sieht keine Einführungskanten vor. Demnach weist das Kopfstück 5.3 die geradlinig verlaufende Innenkante 75 auf. In Fig. 43 sind nur drei Zungen 56.1, 56.2, 56.3 und drei Fenster 58.1, 58.2, 58.3 gezeigt.

Die abstehenden Zungen 56.1, 56.2, 56.3, 56.4, 56.5 sind mit einem gleichen inneren Abstand d (vgl. Fig.43 und 46) voneinander entlang des Profils angeordnet.

Der Einsatz des Profils 2.11 ist in Fig. 42 gezeigt. Die Verriegelungswalze 20 drückt gegen das Basisteil 42 des Profils, wobei das Kopfstücks 5.3 in die trapezförmige Nut 52 eingreift und der Schenkel 43 in Kontakt mit der Andrückfläche 21.2 steht. Die miteinander kontaktierenden Innenflächen 54; 59 bilden mit der Nutzfläche 6 der Baupaneele einen in Fig. 42 gezeigten spitzen Winkel δ₁. Die Ausnehmung 37 verjüngt sich leicht nach unten. Die federelastischen Zungen 56.1, 56.2, 56.3, 56.4, 56.5 verformen sich und stützen sich angespannt an der schrägen Nutflanke 23 der ersten Nut 9 ab.

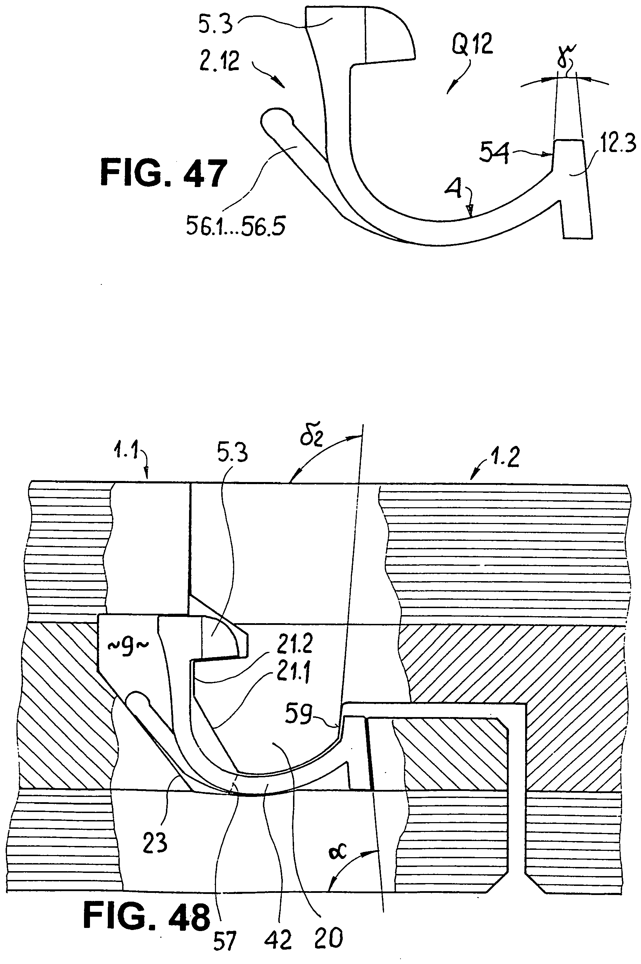

Der Fig. 47 ist ein Querschnitt Q12 eines weiteren, mit Zungen 56.1, 56.2, 56.3, 56.4, 56.5 versehenen Profils 2.12 zu entnehmen. Der Unterschied zum in Fig. 41 gezeigten Profil 2.11 besteht darin, dass sein Fuß 12.3 ähnlich, wie beim Profil 2.9 (vgl. Fig. 34), sich in seinem oberen Bereich nach oben verjüngt.

Die Innenfläche 4 der Wandung 3 des Profils 2.12 sowie die abgerundete untere Oberfläche der Verriegelungswalze 20 (vgl. Fig. 48) sind teilelliptisch.

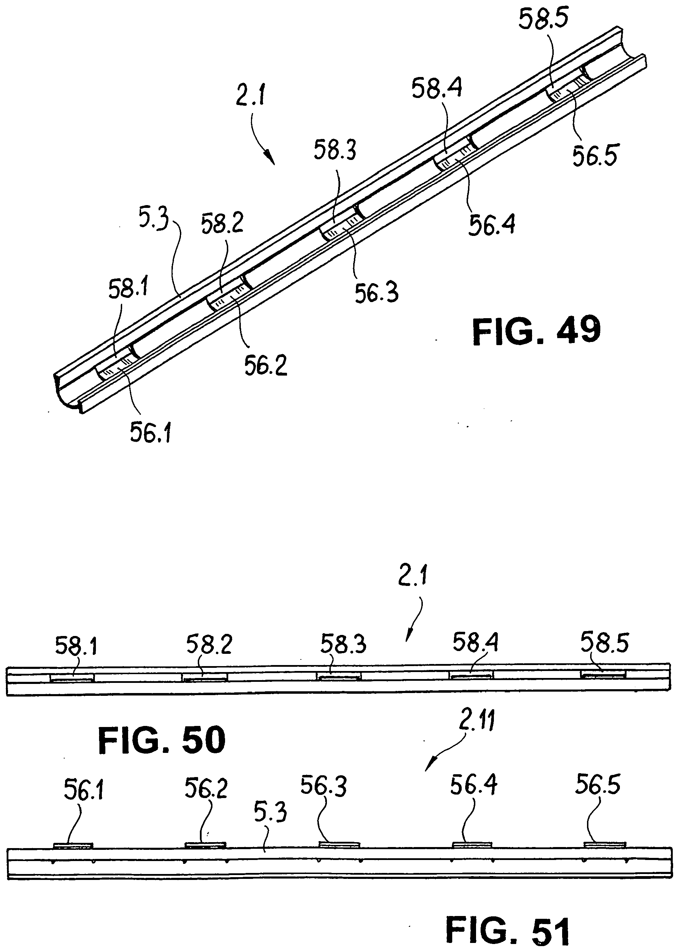

In Fig. 49 ist das Profil 2.12 in einer perspektivischen Ansicht in Richtung Innenseite des Profils und in Figuren 50, 51 in Draufsicht auf das Innere des Profils und auf die Oberseite des Kopfstücks 5.3 gezeigt. Die Figuren zeigen, dass das Kopfstück 5.3 die geradlinig verlaufende Innenkante 75 ohne Einführungskanten aufweist.

Das eingesetzte Profil 2.12 ist in Fig. 48 gezeigt. Die Innenfläche 54 des Fußes 12.3 bildet mit der Innenfläche 59 der Verriegelungswalze 20 den stumpfen Winkel δ₂. Die federelastischen Zungen 56.1, 56.2, 56.3, 56.4, 56.5 stützen sich angespannt an der schrägen Nutflanke 23 der ersten Nut 9 ab.

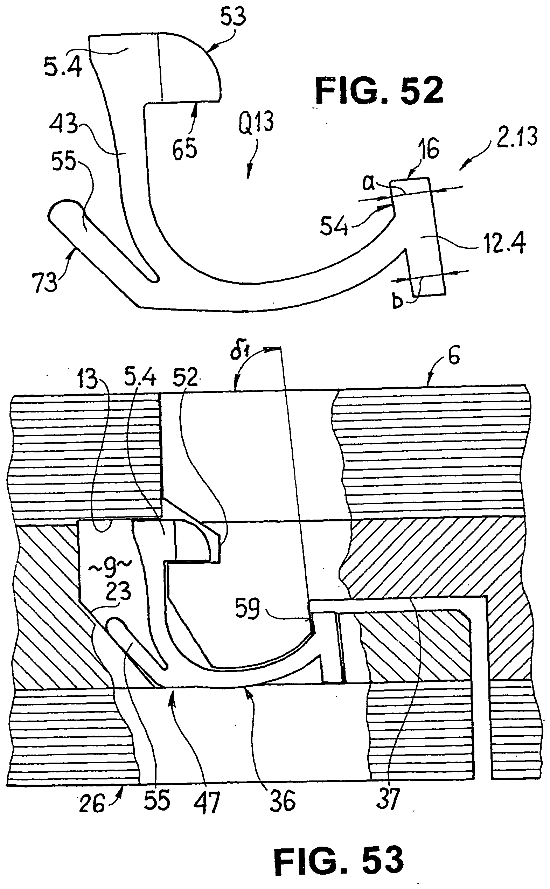

In Fig. 52 ist ein weiterer Querschnitt (Bezugszeichen Q13) eines mit 2.13 bezeichneten Profils dargestellt, der dem in Fig. 37 gezeigten Querschnitt Q10 (Profil 2.10) sehr ähnlich ist. Das Profil 2.13 weist ein abgerundetes Kopfstück 5.4 auf, dessen untere Druckfläche 65 winkelig gegenüber dem ebenen Flächenabschnitt 63 auf der Innenseite des Schenkels 43 angeordnet ist. Im eingesetzten Zustand (vgl. Fig. 53) verläuft die Druckfläche 65 des Kopfstücks 5.4 planparallel zur Nutz- bzw. Basisfläche 6; 26. Außerdem bilden die miteinander kontaktierenden Innenflächen 54; 59 mit der Nutzfläche 6 der Baupaneele den bereits gezeigten spitzen Winkel δ₁. Eine andere Anordnung, z.B. mit stumpfem Winkel δ₂ der miteinander kontaktierenden Innenflächen 54; 59 ist möglich.

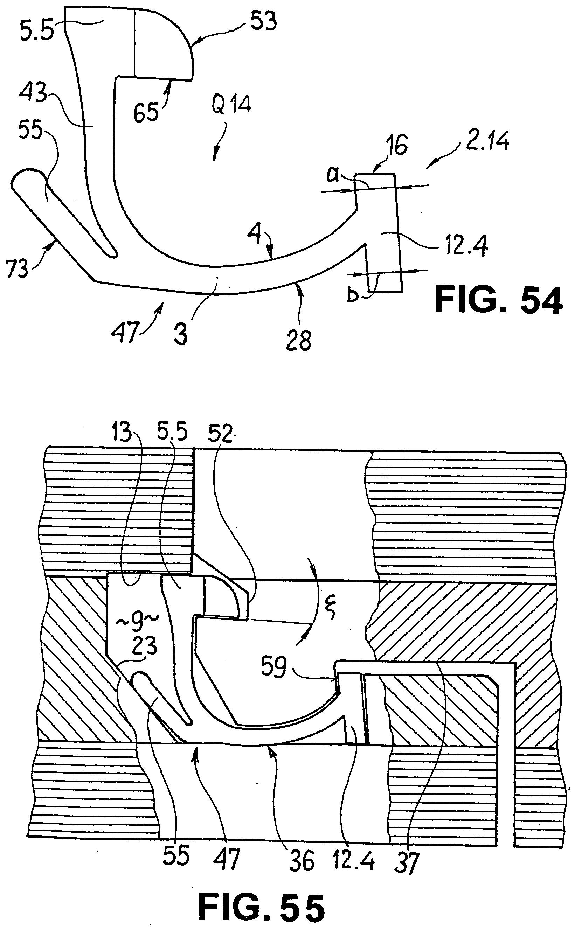

Die Fig. 54 zeigt einen Querschnitt Q14 eines mit 2.14 bezeichneten Profils, dessen Einzelheiten sich von dem Profil 2.10 (vgl. Fig. 37) ableiten lassen. Der Unterschied zwischen beiden Profilen besteht darin, dass das Profil 2.14 im Gegensatz zum Profil 2.10 ein Kopfstück 5.5 mit einer nach unten in Richtung Fuß 12.4 geneigten Druckfläche 65 aufweist.

Im eingesetzten Zustand des Verbinders (vgl. Fig. 55) bildet die Druckfläche 65 mit der Nutz- bzw. Basisfläche 6, 26 der Baupaneele einen scharfen Winkel ξ. Die Größe des Winkels ξ entspricht etwa der Größe des in Fig. 38 abgebildeten Winkels λ. Demnach beträgt der Winkel ξ im vorliegenden Fall etwa 3° bis 5° und kann natürlich variieren. Der Winkel ξ soll jedoch in Hinblick auf vorteilhafte Selbsthemmung der beiden in Kontakt stehenden Flächen wenigstens 2° betragen.

Die Innenfläche 4 sowie die Außenfläche 28 der Wandung 3 verläuft vom Fuß 12.4 beginnend bis zum Übergang 47 zum beweglichen Schenkel 43 teilelliptisch.

Alle mit den Vorsprüngen 48.1, 48.2, 48.3, mit den Stegen 55 und mit den Zungen 56.1, 56.2, 56.3, 56.4, 56.5 versehenen Profile verbessern die Lagestabilität dieser Profile vor und nach der Einführung der Verriegelungswalze 20 in den von der Innenfläche 4 des jeweiligen Profils aufgespannten Innenraum.

### Bezugszeichenliste:

- 1.1; 1.2: Baupaneel
- 2.1; 2.2; 2.3; 2.4: Verbinder
- 2.5; 2.6; 2.7; 2.8: Verbinder
- 2.9; 2.10; 2.11: Verbinder
- 2.12; 2.13; 2.14: Verbinder
- 2.15: Verbinder
- 3: Wandung
- 4: Innenfläche
- 5.1; 5.2; 5.3: Kopfstück
- 6: Nutzfläche
- 7.1, 7.2: Stoßfläche
- 8.1, 8.2: Seitenfläche
- 9: erste Nut
- 10: Nutboden
- 11: Untergrund
- 12.1; 12.2: Fuß
- 12.3; 12.4: Fuß
- 13: Nutflanke
- 14: Verriegelungsarm
- 15: Lippe
- 16: Rand
- 17: Innenfläche
- 18: Druckfläche (v. 2)
- 19: Schräge
- 20: Verriegelungswalze
- 21.1; 21.2: Andrückfläche
- 22: Gleitfläche (v. 2)
- 23: Nutflanke
- 24: Seitenfläche
- 25: scharfer Übergang
- 26: Basisfläche
- 27: Standfläche
- 28: Außenfläche
- 29: untere Fläche
- 30: Fuß
- 31, 32: Ende
- 33.1, 33.2: Nutflanke
- 34: Fußboden
- 35: Boden
- 36: Mulde
- 37: Ausnehmung
- 38: Kernschicht
- 39: Nutzschicht
- 40: Bodenschicht
- 41: Dekorschicht
- 42: Basisteil
- 43: Wandungsteil (Schenkel)
- 44: Außenfläche (v. 42)
- 45: Übergangsbereich
- 46: Oberfläche (v. 20)
- 47: Übergangsbereich
- 48.1; 48.2; 48.3: Vorsprung
- 49.1, 49.2: Einführungskante
- 50: zweite Nut (v. 14)
- 51: Abstufung (v. 2.5)
- 52: Nut (v. 1.2)
- 53: Gleitfläche
- 54: Innenfläche
- 55: Steg (v. 2.9)
- 56.1, 56.2, 56.3: Zunge
- 56.4, 56.5: Zunge
- 57: Biegelinie
- 58.1, 58.2, 58.3: Fenster
- 58.4, 58.5: Fenster
- 59: Innenfläche
- 60: Sitz
- 61: Nut
- 62: Nut
- 63: Flächenabschnitt
- 64: Stützfläche
- 65: Druckfläche
- 66: V-förmige Nut
- 67: Seitenfläche (v. 48.2)
- 68, 69: Schenkel-Abschnitt (v. 2.7)
- 70: Abrundung (v. 12.2)
- 71: freies Ende (v. 48.3)
- 72: Spalte
- 73: Außenfläche (v. 55)
- 74: Außenfläche (v. 56)
- 75: Innenkante
- 76: Abschnitt
- a, b: Dickenmaß
- c: Gerade
- d: Abstand
- α: Winkel
- β: Winkel
- γ: Winkel
- δ₁, δ₂, δ₃: Winkel
- ε: Winkel
- λ: Winkel
- ξ: Winkel

- A: Schwenkachse
- L: Gesamtlänge
- Q1; Q2; Q3; Q4: Querschnitt
- Q5; Q6; Q7; Q8: Querschnitt
- Q9; Q10; Q11; Q12: Querschnitt
- Q13; Q14; Q15: Querschnitt

- S: Spalt
- T: Senkrechte
- X, Y: Pfeil
- 100: Einrichtung

## Patentansprüche

1. Baupaneel mit einer Einrichtung (100) zur Verbindung mit wenigstens einem weiteren gleichartigen Baupaneel auf einem Untergrund (11), wobei das Baupaneel dazu vorgesehen ist, gegen ein bereits verlegtes Baupaneel abgesenkt zu werden, wobei
- das Baupaneel (1.1, 1.2) jeweils gegenüberliegende erste und zweite profilierte Seitenflächen (8.1; 8.2) aufweist, an denen je eine Stoßfläche (7.1, 7.2) angeordnet ist, die senkrecht zu einer Nutzfläche (6) bzw. Basisfläche (26) des Baupaneels liegt,
- die Stoßfläche (7.1) der ersten Seitenfläche (8.1) in eine entlang der ersten Seitenfläche des Baupaneels (1.1.)
verlaufende, erste Nut (9) übergeht,
- über die Stoßfläche (7.1) der ersten Seitenfläche (8.1) des Baupaneels (1.1) ein Verriegelungsarm (14) hinausragt,
- der Verriegelungsarm (14) in eine zur Nutzfläche (6) gerichtete, etwa trapezförmige Lippe (15) ausläuft, die wiederum eine in einen Boden (35) des Verriegelungsarms (14) auslaufende Innenfläche (17) aufweist,
- die erste Nut (9) einen gegenüber der Stossfläche (7.1) der ersten Seitenfläche (8.1) zurückversetzten Nutboden (10) aufweist,
- in die erste Nut (9) des Baupaneels (1.1) ein länglicher, wenigstens teilweise flexibler, separater Verbinder (2.1; 2.2; 2.3; 2.4; 2.5; 2.6; 2.7; 2.8; 2.9; 2.10; 2.11; 2.12; 2.13; 2.14; 2.15) wenigstens teilweise eingelassen ist, der im verlegten Zustand der Baupaneele (1.1, 1.2) mit der zweiten Seitenfläche (8.2) eines gegenüberliegenden Baupaneels (1.2) zusammenwirkt,
- der Verbinder (2.1; 2.2; 2.3; 2.4; 2.5; 2.6; 2.7; 2.8; 2.9; 2.10; 2.11; 2.12; 2.13; 2.14; 2.15) in unverformtem Zustand einen etwa dachrinnenförmigen Querschnitt (Q1; Q2; Q3; Q4; Q5; Q6; Q7; Q8; Q9; Q10; Q11; Q12; Q13; Q14; Q15) aufweist und eine wenigstens teilweise bogenförmige, aus einem Basisteil (42) und einem Schenkel (43) bestehende Wandung (3) besitzt,
- die Wandung (3) mit einer wenigstens teilweise teilzylindrischen oder teilelliptischen Innenfläche (4) an einer Kante dieser Innenfläche - im Querschnitt (Q1; Q2; Q3; Q4; Q5; Q6; Q7; Q8; Q9; Q10; Q11; Q12; Q13; Q14; Q15) des Verbinders gesehen - in ein Kopfstück (5.1; 5.2; 5.3; 5.4; 5.5) und an einer anderen Kante in einen Fuß (12.1; 12.2; 12.3; 12.4; 30) übergeht,
- der Fuß (12.1; 12.2; 12.3; 12.4; 30) eine nach außen gerichtete, im eingesetzten Zustand der Innenfläche (17) der Lippe (15) zugewandte Seitenfläche (24) und eine sich an die Seitenfläche (24) anschließende Standfläche (27) aufweist,
- das Kopfstück (5.1; 5.2; 5.3; 5.4; 5.5) des Verbinders (2.1; 2.2; 2.3; 2.4; 2.5; 2.6; 2.7; 2.8; 2.9; 2.10; 2.11; 2.12; 2.15) im eingesetzten Zustand des Verbinders in Richtung Nutzfläche (6) zeigt,
- der sich an das Basisteil (42) anschließende Schenkel (43), der in das Kopfstück (5.1; 5.2; 5.3; 5.4; 5.5) ausläuft, im eingesetzten Zustand des Verbinders beweglich angeordnet ist, so dass beim Zusammenfügen von Baupaneelen der Schenkel (43) mitsamt Kopfstück (5) in Richtung des Nutbodens (10) verschwenkt werden kann,
- die zweite Seitenfläche (8.2) eine Verriegelungswalze (20) aufweist, welche beim Zusammenfügen zweier Baupaneele (1.1, 1.2) in den von der Innenfläche (4) des Verbinders (2.1; 2.2; 2.3; 2.4; 2.5; 2.6; 2.7; 2.8; 2.9; 2.10; 2.11; 2.12; 2.13; 2.14; 2.15) aufgespannten Innenraum des gegenüberliegenden Baupaneels eingreift,
- die Verriegelungswalze (20) in eine in Richtung Basisfläche (26) offene Ausnehmung (37) des Baupaneels (1.2) übergeht,
- der Boden (35) des Verriegelungsarms (14) und die erste Nut (9) sowie die geneigte Innenfläche (17) der Lippe (15) einen Sitz (60) für die Unterbringung des Verbinders (2.1; 2.2; 2.3; 2.4; 2.5; 2.6; 2.7; 2.8; 2.9; 2.10; 2.11; 2.12; 2.13; 2.14; 2.15) bilden,
- .und wobei das Kopfstück (5.1; 5.2; 5.3) im in die erste Nut (9) eingepassten Zustand des Verbinders (2.1; 2.2; 2.3; 2.4; 2.5; 2.6; 2.7; 2.8; 2.9; 2.10; 2.11; 2.12; 2.13; 2.14; 2.15) wenigstens teilweise gegen eine erste Nutflanke (13) der besagten Nut (9) drückt,
**dadurch gekennzeichnet, dass**
- der Fuß (12.1; 12.2; 12.3; 12.4; 30) des Verbinders mit seiner Seitenfläche (24) und mit seiner Standfläche (27) sowie das dem Boden (35) zugewandte Basisteil (42) des Verbinders die besagte Innenfläche (17) der Lippe und den Boden (35) des Verriegelungsarms (14) vor und nach dem Zusammenfügen zweier Baupaneele (1.1, 1.2) kontaktieren,
- wobei die Lippe (15) des Verriegelungsarms (14) sich in Richtung Bodenschicht (40) derart verjüngt, dass die Innenfläche (17) der Lippe unter einem spitzen Winkel (α) zum Boden (35) des Verriegelungsarms (14) bzw. zur Basisfläche (26) des Baupaneels (1.1) geneigt ist,
- und wobei die Verriegelungswalze (20) wenigstens eine ebene Andrückfläche (21.1) aufweist, die bei der Verbindung zweier Baupaneele gegen das Kopfstück (5.1) stößt, so dass das Kopfstück in Richtung Nutboden (10) verschwenkt wird.

2. Baupaneel nach Anspruch 1, **dadurch gekennzeichnet, dass** die Andrückfläche (21.1; 21.2) schräg oder senkrecht gegenüber der Nutzfläche (6) angeordnet ist und dass die Verriegelungswalze (20) wenigstens eine abgerundete Oberfläche (46) aufweist.

3. Baupaneel nach Anspruch 2, **dadurch gekennzeichnet, dass** die abgerundete Oberfläche (46) der Verriegelungswalze (20) über schräg oder senkrecht gegenüber der Nutzfläche (6) angeordnete, ebene Fläche (59) in die Ausnehmung (37) übergeht.

4. Baupaneel nach Anspruch 1, **dadurch gekennzeichnet, dass** das Kopfstück (5.1; 5.2; 5.3; 5.4; 5.5) eine ebene, im eingesetzten Zustand des Verbinders der ersten Nutflanke (13) zugewandte Druckfläche (18) aufweist, die sich wiederum in eine schräge oder abgerundete Gleitfläche (22; 53) fortsetzt.

5. Baupaneel nach Anspruch 4, **dadurch gekennzeichnet, dass**
- das Kopfstück (5.1; 5.2; 5.3; 5.4; 5.5) eine ebene, der Druckfläche (18) abgewandte, sich zwischen der Gleitfläche (22; 53) und dem Schenkel (43) erstreckende, zweite Druckfläche (65) aufweist,
- die zweite Druckfläche (65) im eingesetzten Zustand des Verbinders - nach der Einführung der Verriegelungswalze (20) - eine ebene Stützfläche (64) der Verriegelungswalze (20) kontaktiert und parallel oder schräg gegenüber der Nutfläche (4) angeordnet ist.

6. Baupaneel nach Anspruch 1, **dadurch gekennzeichnet, dass** die erste Nutflanke (13) der ersten Nut (9) planparallel zur Nutzfläche (6) verläuft.

7. Baupaneel nach einem der Ansprüche 1 bis 6, **dadurch gekennzeichnet, dass** die erste Nut (9) eine zweite, schräg von dem Nutboden (10) ausgehend verlaufende Nutflanke (23) aufweist, die sich wiederum an den Boden (35) des Verriegelungsarms (14) anschließt.

8. Baupaneel nach Anspruch 1 oder 7, **dadurch gekennzeichnet, dass** am Boden (35) des Verriegelungsarms (14) wenigstens eine parallel zur Längsausrichtung der Seitenfläche (8.1) verlaufende Mulde (36) eingebracht ist.

9. Baupaneel nach Anspruch 1, **dadurch gekennzeichnet, dass** die Seitenfläche (24) des Fußes (12.1; 12.2; 12.3; 12.4; 30) über einen länglichen, der Standfläche (27) abgewandten Rand (16) in die Innenfläche (4) der Wandung (3) übergeht.

10. Baupaneel nach Anspruch 1, **dadurch gekennzeichnet, dass**
- die Stoßfläche (7.2) des mit dem Verbinder (2.1; 2.2; 2.3; 2.4; 2.5; 2.6; 2.7; 2.8; 2.15) zusammenwirkenden Baupaneels (1.2) über eine gegenüber der besagten Stoßfläche (7.2) zurückversetzte Schräge (19) in die Verriegelungswalze (20) übergeht,
- und dass die Schräge (19) mit der Verriegelungswalze (20) einen spitzen, konkaven Übergang (25) bilden, an dem sich das Kopfstück (5.1; 5.2) nach dem Einführen der Verriegelungswalze (20) in den Verbinder abstützt.

11. Baupaneel nach Anspruch 1, **dadurch gekennzeichnet, dass**
- die Stoßfläche (7.2) des mit dem Verbinder (2.9; 2.10; 2.11; 2.12; 2.13; 2.14) zusammenwirkenden Baupaneels (1.2) über eine trapezförmige Nut (52) in die Verriegelungswalze (20) übergeht,
- und dass das Kopfstück (5.3) nach dem Einführen der Verriegelungswalze (20) in den Verbinder (2.9; 2.10; 2.11; 2.12) in die Nut (52) eingreift.

12. Baupaneel nach Anspruch 1, **dadurch gekennzeichnet, dass** der Fuß (12.1; 12.2; 12.3; 12.4) stegförmig ist.

13. Baupaneel nach Anspruch 1, **dadurch gekennzeichnet, dass** die teilzylindrische oder teilelliptische Innenfläche (4) des Verbinders (2.9; 2.10; 2.11; 2.12, 2.13; 2.14) über eine plane, streifenförmige Innenfläche (54) in den länglichen Rand (16) des stegförmigen Fußes (12.3; 12.4) ausläuft.

14. Baupaneel nach Anspruch 13, **dadurch gekennzeichnet, dass** die sich an den Rand (16) anschließende, plane, streifenförmige Innenfläche (54) mit der nach außen gerichteten Seitenfläche (24) des Fußes (12.3) einen spitzen Winkel (γ) bildet.

15. Baupaneel nach Anspruch 13, **dadurch gekennzeichnet, dass** die sich an den Rand (16) anschließende, plane, streifenförmige Innenfläche (54) parallel zur nach außen gerichteten Seitenfläche (24) des Fußes (12.4) verläuft.

16. Baupaneel nach einem der Ansprüche 1 bis 15, **dadurch gekennzeichnet, dass**
- der Boden (35) des Verriegelungsarms (14), die Innenfläche (17) der Lippe (15) und eine der Lippe (15) gegenüber liegende, den Boden (35) begrenzende Nutflanke (33.1; 33.2) eine zweite Nut (50; 61; 62) bilden,
- und dass der Basisteil (42) des Verbinders (2.5; 2.6; 2.7; 2.8) in der zweiten Nut (50; 61; 62) festlegbar ist.

17. Baupaneel nach Anspruch 16, **dadurch gekennzeichnet, dass** die zweite Nut (50) sich in Richtung Nutzfläche (6) verjüngt derart, dass die Innenfläche (17) der Lippe (15) mit der Nutflanke (33.1; 33.2) der besagten Nut einen spitzen Winkel (β) bilden.

18. Baupaneel nach Anspruch 16 oder 17, **dadurch gekennzeichnet, dass** der Verbinder (2.6; 2.7; 2.8) in einem Übergangsbereich (47) seines Basisteils (42) zum beweglichen Schenkel (43) wenigstens einen nach außen ragenden, in Längsausrichtung des Verbinders (2.6; 2.7; 2.8) verlaufenden Vorsprung (48.1; 48.2; 48.3) aufweist, der im eingesetzten Zustand des Verbinders die Nutflanke (33.1; 33.2; 33.3) der zweiten Nut (50) kontaktiert.

19. Baupaneel nach einem der vorhergehenden Ansprüche, **dadurch gekennzeichnet, dass** der Verbinder (2.9; 2.10; 2.13; 2.14) wenigstens einen nach außen ragenden, in Längsausrichtung des Verbinders (2.9; 2.10; 2.13; 2.14) verlaufenden, wenigstens teilweise elastisch verformbaren Steg (55) aufweist, der aus einem Übergangsbereich (47) des Basisteils (42) zum beweglichen Schenkel (43) ausgehend - im Querschnitt (Q9; Q10; Q13; Q14) des Verbinders gesehen - schräg gegenüber dem unverformten, besagten Schenkel (43) angeordnet ist und im eingesetzten Zustand des Verbinders die schräge Nutflanke (23) der ersten Nut (9) kontaktiert.

20. Baupaneel nach einem der vorhergehenden Ansprüche, **dadurch gekennzeichnet, dass** der Verbinder (2.11; 2.12) wenigstens eine nach außen ragende, wenigstens teilweise federelastisch verformbare Zunge (56.1, 56.2, 56.3, 56.4, 56.5) aufweist, die aus einem Übergangsbereich (47) des Basisteils (42) zum beweglichen Schenkel (43) ausgehend - im Querschnitt (Q11; Q12) des Verbinders gesehen - schräg gegenüber dem unverformten, besagten Schenkel (43) angeordnet ist und im eingesetzten Zustand des Verbinders die schräge Nutflanke (23) der ersten Nut (9) kontaktiert.

21. Baupaneel nach Anspruch 20, **dadurch gekennzeichnet, dass** die Zunge (56.1, 56.2, 56.3, 56.4, 56.5) in einem Materialstück mit der Wandung (3) des Verbinders (2.11; 2.12) gefertigt ist unter Belassung jeweils eines Fensters (58.1, 58.2, 58.3, 58.4, 58.5).

22. Baupaneel nach einem der vorhergehenden Ansprüche, **dadurch gekennzeichnet, dass** das Kopfstück (5.1; 5.2; 5.3; 5.4; 5.5) in Draufsicht auf seine Druckfläche (18) streifenförmig ist und sich nach außen in Richtung wenigstens einer Schmalseite verjüngt unter Bildung einer schräg angeordneten Einführungskante (49.1, 49.2).

23. Baupaneel nach einem der vorhergehenden Ansprüche, **dadurch gekennzeichnet, dass** das Baupaneel werkseitig mit wenigstens einem, wenigstens teilweise in den Sitz (60) des Verriegelungsarms (14) vorzugsweise maschinell hineingepressten und dort festgelegten Verbinder (2.1; 2.2; 2.3; 2.4; 2.5; 2.6; 2.7; 2.8; 2.9; 2.10; 2.11; 2.12; 2.13; 2.14; 2.15) ausgestattet ist unter Beibehaltung der Beweglichkeit des das Kopfstück (5.1; 5.2; 5.3; 5.4; 5.5) tragenden Schenkels (43).

## Claims

1. Construction panel having an arrangement (100) for connection to at least one further similar construction panel on a sub-surface (11), wherein the construction panel is provided to be lowered against an already laid construction panel, wherein
- the construction panel (1.1, 1.2) comprises in each case opposing first and second profiled side surfaces (8.1; 8.2), on each of which an abutment surface (7.1, 7.2) is disposed which is perpendicular to a usage surface (6) or base surface (26) of the construction panel,
- the abutment surface (7.1) of the first side surface (8.1) transitions into a first groove (9) which extends along the first side surface of the construction panel (1.1),
- a locking arm (14) protrudes over the abutment surface (7.1) of the first side surface (8.1) of the construction panel (1.1),
- the locking arm (14) runs out in an approximately trapezoidal lip (15) which is oriented towards the usage surface (6) and has in turn an inner surface (17) running out into a bottom (35) of the locking arm (14),
- the first groove (9) comprises a groove bottom (10) which is set back with respect to the abutment surface (7.1) of the first side surface (8.1),
- an elongate, at least partially flexible, separate connector (2.1; 2.2; 2.3; 2.4; 2.5; 2.6; 2.7; 2.8; 2.9; 2.10; 2.11; 2.12; 2.13; 2,14; 2.15) which, in the laid state of the construction panels (1.1, 1.2), cooperates with the second side surface (8.2) of an opposing construction panel (1.2), is at least partially let into the first groove (9) of the construction panel (1.1),
- the connector (2.1; 2.2; 2.3; 2.4; 2,6; 2.6; 2.7; 2.8; 2.9; 2.10; 2.11; 2.12; 2.13; 2.14; 2.15), in the undeformed state, comprises an approximately gutter-shaped cross-section (Q1; Q2; Q3; Q4; Q5; Q6; Q7; Q8; Q9; Q10; Q11; Q12; Q13; Q14; Q15) and has an at least partially arcuate wall (3) consisting of a base part (42) and a limb (43),
- an at least partially part-cylindrical or part-elliptical inner surface (4) of the wall (3) transitions at one edge of this inner surface - as seen in cross-section (Q1; Q2; Q3; Q4; Q5; Q6; Q7; Q8; Q9; Q10; Q11; Q12; Q13; Q14; Q15) of the connector - into a headpiece (5.1; 5.2; 5.3; 5.4; 5.5) and, at another edge, into a foot (12.1; 12.2; 12.3; 12.4; 30),
- the foot (12.1; 12.2; 12.3; 12.4; 30) comprises an outwardly-oriented side surface (24) which, in the installed state, faces the inner surface (17) of the lip (15), and a standing surface (27) adjoining the side surface (24),
- when the connector is in the installed state, the head piece (5.1; 5.2; 5.3; 5.4; 5.5) of the connector (2.1; 2.2; 2.3; 2.4; 2.5; 2.6; 2.7; 2.8; 2.9; 2.10; 2.11; 2.12; 2.15) points in the direction of the usage surface (6),
- when the connector is In the installed state, the limb (43) which adjoins the base part (42) and runs out into the head piece (5.1; 5.2; 5.3; 5.4; 5.5), is disposed movably so that, when the construction panels are fitted together, the limb (43) can be pivoted together with the head piece (5) in the direction of the groove bottom (10),
- the second side surface (8.2) comprises a locking roller (20) which, when two construction panels (1.1, 1.2) are being fitted together, engages in the inner space of the opposing construction panel spanned by the inner surface (4) of the connector (2.1; 2.2; 2.3; 2.4; 2.5; 2.6; 2.7; 2.8; 2.9; 2.10; 2.11; 2.12; 2,13; 2.14; 2.15),
- the locking roller (20) transitions Into a recess (37) of the construction panel (1.2), which is open in the direction of the base surface (26),
- the bottom (35) of the locking arm (14) and the first groove (9), as well as the inclined inner surface (17) of the lip (15), form a seat (60) for accommodation of the connector (2.1; 2.2; 2.3; 2.4; 2.5; 2.6; 2.7; 2.8; 2.9; 2.10; 2.11; 2.12; 2.13; 2.14; 2.15),
- and wherein, when the connector (2.1; 2.2; 2.3; 2.4; 2.5; 2.6; 2.7; 2.8; 2.9; 2.10; 2.11; 2.12; 2.13; 2.14; 2.15) is in the state fitted into the first groove (9), the head piece (5.1; 5.2; 5.3) is pressed at least partially against a first groove flank (13) of said groove (9), **characterised in that**
- the side surface (24) and the standing surface (27) of the foot (12.1; 12.2; 12.3; 12.4; 30) of the connector, as well as the base part (42) of the connector facing the bottom (35) are in contact with said inner surface (17) of the lip and the bottom (35) of the locking arm (14) before and after two construction panels (1.1, 1.2) are fitted together,
- wherein the lip (15) of the locking arm (14) tapers in the direction of the bottom layer (40) in such a manner that the inner surface (17) of the lip is inclined at an acute angle (α), with respect to the bottom (35) of the locking arm (14) or with respect to the base surface (26) of the construction panel (1.1),
- and wherein the locking roller (20) comprises at least one planar pressure surface (21.1) which, during connection of two construction panels, abuts against the head piece (5.1) so that the head piece is pivoted in the direction of the groove bottom (10).

2. Construction panel as claimed in claim 1, **characterised in that** the pressure surface (21.1; 21.2) is disposed in an inclined manner or perpendicularly with respect to the usage surface (6), and that the locking roller (20) comprises at least one rounded surface (46).

3. Construction panel as claimed in claim 2, **characterised in that** the rounded surface (46) of the locking roller (20) transitions into the recess (37) via a planar surface (59) which is disposed in an inclined manner or perpendicularly with respect to the usage surface (6).

4. Construction panel as claimed in claim 1, **characterised in that** the head piece (5.1; 5.2; 5.3; 5.4; 5.5) comprises a planar pressing surface (18) which, when the connector is in the installed state, faces the first groove flank (13) and, in turn, continues as an inclined or rounded sliding surface (22; 53).

5. Construction panel as claimed in claim 4, **characterised in that**
- the head piece (5.1; 5.2; 5.3; 5.4; 5.5) comprises a planar second pressing surface (65) which faces away from the pressing surface (18) and extends between the sliding surface (22; 53) and the limb (43),
- when the connector is in the installed state - and after the locking roller (20) has been introduced - the second pressing surface (65) contacts a planar supporting surface (64) of the locking roller (20) and is disposed parallel or in an inclined manner with respect to the groove surface (4).

6. Construction panel as claimed in claim 1, **characterised in that** the first groove flank (13) of the first groove (9) extends plane-parallel with respect to the usage surface (6).

7. Construction panel as claimed in any one of claims 1 to 6, **characterised in that** the first groove (9) comprises a second groove flank (23) which extends in an inclined manner starting from the groove bottom (10) and in turn adjoins the bottom (35) of the locking arm (14).

8. Construction panel as claimed in claim 1 or 7, **characterised in that** at least one trough (36) which extends in parallel with the longitudinal orientation of the side surface (8.1) is introduced at the bottom (35) of the locking arm (14).

9. Construction panel as claimed in claim 1, **characterised in that** the side surface (24) of the foot (12.1; 12.2; 12.3; 12.4; 30) transitions into the inner surface (4) of the wall (3) via an elongate edge (16) facing away from the standing surface (27).

10. Construction panel as claimed in claim 1, **characterised in that**
- the abutment surface (7.2) of the construction panel (1.2) cooperating with the connector (2.1; 2.2; 2.3; 2.4; 2.5; 2.6; 2.7; 2.8; 2.15) transitions into the locking roller (20) via an incline (19) which is set back with respect to said abutment surface (7.2),
- and that the incline (19), together with the locking roller (20), forms a pointed, concave transition (25), at which the head piece (5.1; 5.2) is supported after the locking roller (20) has been introduced into the connector.

11. Construction panel as claimed in claim 1, **characterised in that**
- the abutment surface (7.2) of the construction panel (1.2) cooperating with the connector (2.9; 2.10; 2.11; 2.12; 2.13; 2.14) transitions into the locking roller (20) via a trapezoidal groove (52),
- and that the head piece (5.3) engages into the groove (52) after the locking roller (20) has been introduced into the connector (2.9; 2.10; 2.11; 2.12).

12. Construction panel as claimed in claim 1, **characterised in that** the foot (12.1; 12.2; 12.3; 12.4) is in the form of a web.

13. Construction panel as claimed in claim 1, **characterised in that** the part-cylindrical or part-elliptical inner surface (4) of the connector (2.9; 2.10; 2.11; 2.12, 2.13; 2.14) runs out via a planar, strip-like inner surface (54) into the elongate edge (16) of the web-like foot (12.3; 12.4).

14. Construction panel as claimed in claim 13, **characterised in that** the planar, strip-like inner surface (54) adjoining the edge (16) forms an acute angle (γ) with the outwardly oriented side surface (24) of the foot (12.3).

15. Construction panel as claimed in claim 13, **characterised in that** the planar, strip-like inner surface (54) adjoining the edge (16) extends in parallel with the outwardly oriented side surface (24) of the foot (12.4).

16. Construction panel as claimed in any one of claims 1 to 15, **characterised in that**
- the bottom (35) of the locking arm (14), the inner surface (17) of the lip (15), and a groove flank (33.1; 33.2) located opposite the lip (15) and defining the bottom (35), form a second groove (50; 61; 62),
- and that the base part (42) of the connector (2.5; 2.6; 2.7; 2.8) can be fixed in the second groove (50; 61: 62).

17. Construction panel as claimed In claim 16, **characterised in that** the second groove (50) tapers in the direction of the usage surface (6) in such a manner that the inner surface (17) of the lip (15) forms an acute angle (β) with the groove flank (33.1; 33.2) of said groove.

18. Construction panel as claimed in claim 16 or 17, **characterised in that** the connector (2.6; 2.7; 2.8), in a transition region (47) of the base part (42) thereof to the movable limb (43), comprises at least one outwardly protruding protection (48.1; 48.2; 48.3) extending in the longitudinal orientation of the connector (2.6; 2.7; 2.8) and, when the connector is in the installed state, contacts the groove flank (33.1; 33.2; 33.3) of the second groove (50).

19. Construction panel as claimed in any one of the preceding claims, **characterised in that** the connector (2.9; 2.10; 2.13; 2.14) comprises at least one outwardly protruding web (55) which extends in the longitudinal orientation of the connector (2.9; 2.10: 2.13; 2.14), can be elastically deformed at least partially and, starting from a transition region (47) of the base part (42) to the movable limb (43) - as seen in the cross-section (Q9; Q10; Q13; Q14) of the connector - is disposed in an inclined manner with respect to said undeformed limb (43) and, when the connector is in the installed state, contacts the inclined groove flank (23) of the first groove (9).

20. Construction panel as claimed in any one of the preceding claims, **characterised in that** the connector (2.11; 2.12) comprises at least one outwardly protruding, at least partially elastically deformable tongue (56.1, 56.2, 56.3, 56.4, 56.5) which, starting from a transition region (47) of the base part (42) to the movable limb (43) - as seen in the cross-section (Q11; Q12) of the connector - is disposed in an inclined manner with respect to said undeformed limb (43) and, when the connector is in the installed state, contacts the inclined groove flank (23) of the first groove (9).

21. Construction panel as claimed in claim 20, **characterised in that** the tongue (56.1, 56.2, 56.3, 56.4, 56.5) is produced in one piece of material with the wall (3) of the connector (2.11; 2.12), a window (58.1, 58.2, 58.3. 58.4, 58.5) being left in each case.

22. Construction panel as claimed in any one of the preceding claims, **characterised in that** the head piece (5.1; 5.2; 5.3; 5.4; 5.5), in a top view of the pressing surface (18) thereof, is in the form of a strip and tapers outwardly in the direction of at least one narrow side, forming an introduction edge (49.1, 49.2) disposed in an inclined manner.

23. Construction panel as claimed in any one of the preceding claims, **characterised in that** the construction panel is equipped in the factory with at least one connector (2.1; 2.2; 2.3; 2.4; 2.5; 2.6; 2.7; 2.8; 2.9; 2.10; 2.11; 2.12; 2.13; 2.14; 2.15) which, preferably by machine, is pressed at least partially into the seat (60) of the locking arm (14) and is fixed there, the mobility of the limb (43) supporting the head piece (5.1; 5.2; 5.3; 5.4; 5.5) being retained.

## Revendications

1. Panneau de construction avec un dispositif (100) de liaison avec au moins un autre panneau de construction de même type sur un sous-sol (11), dans lequel le panneau de construction est prévu pour être abaissé contre un panneau de construction déjà posé, dans lequel
- le panneau de construction (1.1, 1.2) présente des première et deuxième surfaces latérales profilées respectivement opposées (8.1 ; 8.2), au niveau desquelles respectivement une surface de butée (7.1, 7.2) est agencée qui se trouve perpendiculairement à une surface utile (6) ou surface de base (26) du panneau de construction,
- la surface de butée (7.1) de la première surface latérale (8.1) se transforme en une première rainure (9) s'étendant le long de la première surface latérale du panneau de construction (1.1.),
- un bras de verrouillage (14) dépasse de la surface de butée (7.1) de la première surface latérale (8.1) du panneau de construction (1.1),
- le bras de verrouillage (14) se termine en une lèvre (15) à peu près trapézoïdale dirigée vers la surface utile (6), qui présente à son tour une surface intérieure (17) se terminant en un fond (35) du bras de verrouillage (14),
- la première rainure (9) présente un fond de rainure (10) en retrait par rapport à la surface de butée (7.1) de la première surface latérale (8.1),
- un connecteur séparé, au moins partiellement flexible, allongé (2.1 ; 2.2 ; 2.3; 2.4 ; 2.5; 2.6; 2.7 ; 2.8; 2.9; 2.10; 2.11 ; 2.12 ; 2.13 ; 2.14 ; 2.15), qui coopère à l'état posé des panneaux de construction (1.1, 1.2) avec la deuxième surface latérale (8.2) d'un panneau de construction opposé (1.2), est encastré au moins partiellement dans la première rainure (9) du panneau de construction (1.1),
- le connecteur (2.1 ; 2.2 ; 2.3 ; 2.4 ; 2.5 ; 2.6 ; 2.7 ; 2.8 ; 2.9 ; 2.10 ; 2.11 ; 2.12 ; 2.13 ; 2.14 ; 2.15) présente à l'état non déformé une section transversale à peu près en forme de gouttière (Q1 ; Q2 ; Q3 ; Q4 ; Q5 ; Q6 ; Q7 ; QS ; Q9 ; Q10 ; Q11 ; Q12 ; Q13 ; Q14 ; Q15) et une paroi (3) au moins partiellement en forme d'arc, constituée par une partie de base (42) et une branche (43),
- la paroi (3) avec une surface intérieure (4) partiellement elliptique ou au moins partiellement cylindrique se transforme au niveau d'une arête de cette surface intérieure - vu dans la section transversale (Q1 ; Q2 ; Q3 ; Q4 ; Q5 ; Q6 ; Q7 ; Q8 ; Q9 ; Q10 ; Q11 ; Q12 ; Q13 ; Q14 ; Q15) du connecteur - en une tête (5.1 ; 5.2 ; 5.3 ; 5.4 ; 5.5) et au niveau d'une autre arête en un pied (12.1 ; 12.2; 12.3; 12.4 ; 30),
- le pied (12.1 ; 12.2 ; 12.3 ; 12.4 ; 30) présente une surface latérale (24) dirigée vers l'extérieur, tournée vers la lèvre (15) à l'état inséré de la surface intérieure (17) et une surface d'appui (27) se raccordant à la surface latérale (24),
- la tête (5.1 ; 5.2 ; 5.3 ; 5.4 ; 5.5) du connecteur (2.1 ; 2.2 ; 2.3 ; 2.4 ; 2.5 ; 2.6 ; 2.7; 2.8; 2.9; 2.10; 2.11 ; 2.12 ; 2.15) est orientée en direction de la surface utile (6) à l'état inséré du connecteur,
- la branche (43) se raccordant à la partie de base (42), qui se termine par la tête (5.1 ; 5.2 ; 5.3 ; 5.4 ; 5.5), est agencée de manière mobile à l'état inséré du connecteur de façon à ce que lors de l'assemblage de panneaux de construction, la branche (43) puisse être basculée avec la tête (5) en direction du fond de rainure (10),
- la deuxième surface latérale (8.2) présente un cylindre de verrouillage (20), laquelle entre en prise dans l'espace intérieur défini par la surface intérieure (4) du connecteur (2.1 ; 2.2 ; 2.3 ; 2.4 ; 2.5 ; 2.6 ; 2.7 ; 2.8 ; 2.9 ; 2.10 ; 2.11 ; 2.12 ; 2.13 ; 2.14 ; 2.15) du panneau de construction opposé lors de l'assemblage de deux panneaux de construction (1.1, 1.2),
- le cylindre de verrouillage (20) se transforme en un évidement ouvert (37) en direction de la surface de base (26) du panneau de construction (1.2),
- le fond (35) du bras de verrouillage (14) et la première rainure (9) ainsi que la surface intérieure inclinée (17) de la lèvre (15) forment un siège (60) pour le logement du connecteur (2.1 ; 2.2 ; 2.3 ; 2.4 ; 2.5 ; 2.6 ; 2.7 ; 2.8 ; 2.9 ; 2.10 ; 2.11 ; 2.12; 2.13 ; 2.14; 2.15),
- et dans lequel la tête (5.1 ; 5.2 ; 5.3) pousse à l'état adapté dans la première rainure (9) du connecteur (2.1 ; 2.2 ; 2.3 ; 2.4 ; 2.5 ; 2.6 ; 2.7 ; 2.8 ; 2.9 ; 2.10 ; 2.11 ; 2.12 ; 2.13 ; 2.14 ; 2.15) au moins en partie contre un premier flanc de rainure (13) de ladite rainure (9),
**caractérisé en ce que**
- le pied (12.1 ; 12.2 ; 12.3 ; 12.4 ; 30) du connecteur avec sa surface latérale (24) et avec sa surface d'appui (27) ainsi que la partie de base (42) tournée vers le sol (35) du connecteur touchent ladite surface intérieure (17) de la lèvre et le fond (35) du bras de verrouillage (14) avant et après l'assemblage de deux panneaux de construction (1.1, 1.2),
- dans lequel la lèvre (15) du bras de verrouillage (14) en direction de la couche de fond (40) de telle manière que la surface intérieure (17) de la lèvre est inclinée en formant un angle aigu (□) par rapport au fond (35) du bras de verrouillage (14) ou par rapport à la surface de base (26) du panneau de construction (1.1),
- et dans lequel le cylindre de verrouillage (20) présente au moins une surface de pression plane (21.1), qui bute la tête (5.1) lors de la liaison de deux panneaux de construction de façon à ce que la tête soit basculée en direction du fond de rainure (10).

2. Panneau de construction selon la revendication 1, **caractérisé en ce que** la surface de pression (21.1 ; 21.2) est agencée de manière inclinée ou perpendiculaire par rapport à la surface utile (6) et **en ce que** le cylindre de verrouillage (20) présente au moins une surface supérieure arrondie (46).

3. Panneau de construction selon la revendication 2, **caractérisé en ce que** la surface supérieure arrondie (46) du cylindre de verrouillage (20) se transforme en évidement (37) par le biais d'une surface (59) plane, agencée de manière inclinée ou perpendiculaire par rapport à la surface utile (6).

4. Panneau de construction selon la revendication 1, **caractérisé en ce que** la tête (5.1 ; 5.2 ; 5.3 ; 5.4 ; 5.5) présente une surface de pression (18) plane, tournée vers le premier flanc de rainure (13) à l'état inséré du connecteur, qui se poursuit à son tour en une surface de glissement (22 ; 53) inclinée ou arrondie.

5. Panneau de construction selon la revendication 4, **caractérisé en ce que**
- la tête (5.1 ; 5.2 ; 5.3 ; 5.4 ; 5.5) présente une deuxième surface de pression (65) plane, opposée à la surface de pression (18), s'étendant entre la surface de glissement (22 ; 53) et la branche (43),
- la deuxième surface de pression (65) touche à l'état inséré du connecteur - après l'introduction du cylindre de verrouillage (20) - une surface support (64) plane du cylindre de verrouillage (20) et est agencée en parallèle ou de manière inclinée par rapport à la surface de rainure (4).

6. Panneau de construction selon la revendication 1, **caractérisé en ce que** le premier flanc de rainure (13) de la première rainure (9) s'étend dans un plan parallèle à la surface utile (6).

7. Panneau de construction selon l'une quelconque des revendications 1 à 6, **caractérisé en ce que** la première rainure (9) présente un deuxième flanc de rainure (23) s'étendant de manière inclinée à partir du fond de rainure (10), qui se raccorde à son tour au fond (35) du bras de verrouillage (14).

8. Panneau de construction selon la revendication 1 ou 7, **caractérisé en ce qu'**au moins une auge (36) s'étendant parallèlement à l'orientation longitudinale de la surface latérale (8.1) est intégrée au fond (35) du bras de verrouillage (14).

9. Panneau de construction selon la revendication 1, **caractérisé en ce que** la surface latérale (24) du pied (12.1 ; 12.2 ; 12.3 ; 12.4 ; 30) se transforme en surface intérieure (4) de la paroi (3) par le biais d'un bord (16) allongé, opposé à la surface d'appui (27).

10. Panneau de construction selon la revendication 1, **caractérisé en ce que**
- la surface de butée (7.2) du panneau de construction (1.2) coopérant avec le connecteur (2.1 ; 2.2 ; 2.3 ; 2.4 ; 2.5 ; 2.6 ; 2.7 ; 2.8 ; 2.15) se transforme en cylindre de verrouillage (20) par le biais d'un biseau (19) en retrait par rapport à ladite surface de butée (7.2),
- et **en ce que** le biseau (19) forme avec le cylindre de verrouillage (20) une transition (25) aiguë, concave contre laquelle la tête (5.1 ; 5.2) s'appuie après l'introduction du cylindre de verrouillage (20) dans le connecteur.

11. Panneau de construction selon la revendication 1, **caractérisé en ce que**
- la surface de butée (7.2) du panneau de construction (1,2) coopérant avec le connecteur (2.9 ; 2.10 ; 2.11 ; 2.12 ; 2.13 ; 2.14) se transforme en cylindre de verrouillage (20) par le biais d'une rainure trapézoïdale (52),
- et **en ce que** la tête (5.3) entre en prise dans la rainure (52) après l'introduction du cylindre de verrauillage (20) dans le connecteur (2.9 ; 2.10 ; 2.11 ; 2.12).

12. Panneau de construction selon la revendication 1, **caractérisé en ce que** le pied (12.1 ; 12.2 ; 12.3 ; 12.4) est en forme de moulure.

13. Panneau de construction selon la revendication 1, **caractérisé en ce que** la surface intérieure (4) partiellement elliptique ou partiellement cylindrique du connecteur (2.9 ; 2.10 ; 2,11 ; 2.12 ; 2.93 ; 2.14) se termine en bord allongé (16) du pied en forme de moulure (12.3 ; 12.4) par le biais d'une surface intérieure (54) plane, en forme de bande.

14. Panneau de construction selon la revendication 13, **caractérisé en ce que** la surface intérieure (54) en forme de bande, plane, se raccordant au bord (16) forme avec la surface latérale (24) dirigée vers l'extérieur du pied (12.3) un angle aigu (□).

15. Panneau de construction selon la revendication 13, **caractérisé en ce que** la surface intérieure (54) en forme de bande, plane, se raccordant au bord (16) s'étend parallèlement à la surface latérale (24) dirigée vers l'extérieur du pied (12.4).

16. Panneau de construction selon l'une quelconque des revendications 1 à 15, **caractérisé en ce que**
- le fond (35) du bras de verrouillage (14), la surface intérieure (17) de la lèvre (15) et un flanc de rainure (33.1 ; 33.2) opposé à la lèvre (15) délimitant le fond (35), forment une deuxième rainure (50 ; 61 ; 62),
- et **en ce que** la partie de base (42) du connecteur (2.5 ; 2.6 ; 2.7 ; 2.8) peut être fixée dans la deuxième rainure (50 ; 61 ; 62).

17. Panneau de construction selon la revendication 16, **caractérisé en ce que** la deuxième rainure (50) s'amincit en direction de la surface utile (6) de telle manière que la surface intérieure (17) de la lèvre (15) forme avec le flanc de rainure (33.1 ; 33.2) de ladite rainure un angle aigu (□).

18. Panneau de construction selon la revendication 16 ou 17, **caractérisé en ce que** le connecteur (2.6 ; 2.7 ; 2.8) présente dans une zone de transition (47) de sa partie de base (42) vers le montant mobile (43) au moins une saillie (48.1 ; 48.2 ; 48.3) dépassant vers l'extérieur, s'étendant dans une orientation longitudinale du connecteur (2.6 ; 2.7 ; 2.8), qui touche le flanc de rainure (33.1 ; 33.2 ; 33.3) de la deuxième rainure (50) à l'état inséré du connecteur.

19. Panneau de construction selon l'une quelconque des revendications précédentes, **caractérisé en ce que** le connecteur (2.9; 2.10 ; 2.13 ; 2.14) présente au moins une moulure (55) déformable au moins partiellement de manière élastique, s'étendant dans une orientation longitudinale du connecteur (2.9 ; 2.10 ; 2.13 ; 2.14), dépassant vers l'extérieur, qui est agencée en partant de la zone de transition (47) de la partie de base (42) vers la branche mobile (43) - vu dans la section transversale (Q9 ; Q10 ; Q13 ; Q14) du connecteur - de manière inclinée par rapport à ladite branche non déformée (43) et touche le flanc de rainure (23) Incliné de la première rainure (9) à l'état inséré du connecteur.

20. Panneau de construction selon l'une quelconque des revendications précédentes, **caractérisé en ce que** le connecteur (2.11 ; 2.12) présente au moins une languette (56.1, 56.2, 56.3, 56.4, 56.5) déformable au moins partiellement en faisant ressort, dépassant vers l'extérieur, qui est agencée en partant de la zone de transition (47) de la partie de base (42) vers la branche mobile (43) - vu dans la section transversale (Q11 ; Q12) du connecteur - de manière inclinée par rapport à ladite branche non déformée (43) et touche le flanc de rainure (23) incliné de la première rainure (9) à l'état inséré du connecteur.

21. Panneau de construction selon la revendication 20, **caractérisé en ce que** la languette (56.1, 56.2, 56.3, 56.4, 56.5) est réalisée dans une pièce de matériau avec la paroi (3) du connecteur (2.11 ; 2.12) et en laissant respectivement une fenêtre (58.1, 58.2, 56.3, 58.4, 58.5).

22. Panneau de construction selon l'une quelconque des revendications précédentes, **caractérisé en ce que** la tête (5.1 ; 5.2 ; 5.3 ; 5.4 ; 5.5) dans une vue de dessus de sa surface de pression (18) est en forme de bande et s'amincit vers l'extérieur en direction d'au moins un côté étroit en formant une arête d'introduction (49.1, 49.2) agencée de manière inclinée.

23. Panneau de construction selon l'une quelconque des revendications précédentes, **caractérisé en ce que** le panneau de construction est équipé à l'usine d'au moins un connecteur (2.1 ; 2.2 ; 2.3 ; 2.4 ; 2.5 ; 2.6 ; 2.7 ; 2.8 ; 2.9 ; 2.10 ; 2.11 ; 2.12 ; 2.13 ; 2.14 ; 2.15) pressé au moins en partie dans le siège (60) du bras de verrouillage (14) de préférence mécaniquement et y étant fixé en conservant la mobilité de la branche (43) portant la tête (5.1 ; 5.2 ; 5.3 ; 5.4 ; 5.5).
